# EUROPEAN PATENT APPLICATION

(11) **EP 4 477 338 A1**
(43) Date of publication of application: **18.12.2024**
(21) Application number: 22923361.4
(22) Date of filing: 31.10.2022
(51) Int. Cl.: B22F 9/16, C22C 3/00, B82Y 30/00, C22C 30/00, C22C 1/02, C22C 35/00

(54) **SPHERICAL IRON ALLOY POWDER MATERIAL AS WELL AS PREPARATION METHOD THEREFOR AND USE THEREOF**

(30) Priority: 25.01.2022 CN 202210086657; 23.03.2022 WO PCT/CN2022/082504
(71) Applicant: Zhao, Yuanyun, Guangdong 523000 (CN)
(72) Inventor: Zhao, Yuanyun, Guangdong 523000 (CN)
(74) Representative: Boult Wade Tennant LLP
(86) International application number: PCT/CN2022/128595
(87) International publication number: WO 2023/142563

(57) **Abstract**

The invention relates to a spherical iron alloy powder material, its preparation method, and its uses. By selecting a dominated Fe-La based alloy system and adding special alloy elements for spheroidization precipitation and corrosion resistant, the invention achieves the dispersion of spherical Fe-rich particles containing spheroidization precipitation elements in a La-rich matrix phase during the alloy solidification process. By removing the La-rich matrix phase, spherical iron alloy powder materials with particle sizes ranging from the nanoscale to tens of micrometers are obtained. This method is simple and can produce spherical iron alloy powders with various morphologies, including nanoscale, submicron, and micron sizes. It has excellent application prospects in fields such as powder metallurgy, metal injection molding (MIM), 3D printing, magnetic materials, heat-resistant materials, high-temperature alloys, coatings, electrical heating materials, wave-absorbing materials, and magnetic fluids.

## Description

### TECHNICAL FIELD

The present invention relates to the technical field of metal powder materials, specifically to a spherical iron alloy powder material and its preparation method and application.

### BACKGROUND

Fe alloys are the most widely used metallic materials. By using microand nano-sized Fe alloy powders as raw materials, a wide range of Fe alloy materials with various properties can be produced through additive manufacturing technologies such as powder metallurgy, metal injection molding (MIM), or 3D printing. Examples include Fe-Cr ferritic stainless steel, Fe-Cr-Ni austenitic stainless steel, Fe-Cr-Al electric heating alloys, Fe-Cr-Co permanent magnets, and Fe-Cr-Si soft magnetic materials.

Spherical or near-spherical Fe alloy particles are key raw materials in applications such as powder metallurgy, powder coatings, metal injection molding (MIM), 3D printing, and magnetic materials due to their excellent flowability, uniformity, and powder stacking density. In many cases, it is essential to use spherical or near-spherical particles as raw materials to achieve the desired application effect in the final material. Currently, spherical Fe alloy powder materials are mainly prepared by atomization, a method that involves breaking up liquid metals or alloys into powder using high-velocity fluids. However, due to the limitations of the atomization method, it is generally only suitable for preparing spherical Fe alloy powders with sizes ranging from 10 µm to 150 µm. For spherical Fe alloy powder materials smaller than 10 µm, especially those with particle sizes ranging from nanometers to several micrometers (below 10 µm), the atomization method is difficult or impossible to use. Therefore, developing a preparation method for ultrafine spherical iron alloy powder materials with particle sizes ranging from nanometers to several micrometers is of significant practical importance.

### SUMMARY

Based on the above technical issues, it is necessary to provide a method for preparing spherical iron alloy powder materials that is simple in process, low in cost, and easy to operate. To solve the above technical issues, the technical solution of the present invention includes the following aspects:

In the first aspect, a method for preparing spherical iron alloy powder materials is provided, comprising the following steps:
Step 1: selecting the initial alloy raw materials, melting the initial alloy raw materials according to the initial alloy composition ratio to obtain a uniform initial alloy melt; the main components of the initial alloy melt are LaₓFe_{y}T_{z}MₐD_{b}, wherein T includes at least one of Cr or V, M includes at least one of Al, Ni, Co, or Si, and D includes at least one of Mo, W, or Ti; x, y, z, a, and b represent the atomic percentage content of the corresponding element respectively, and 18% ≤ x ≤ 95.8%, 4% ≤ y ≤ 81.8%, 0.1% ≤ z ≤ 35%, 0 ≤ a≤ 40%, and 0 ≤ b ≤ 15%;
Step 2: solidifying the initial alloy melt into an initial alloy solid using rapid solidification technology; the solidified structure of the initial alloy solid includes a matrix phase and a dispersed particle phase; the melting point of the matrix phase is lower than that of the dispersed particle phase, and the dispersed particle phase is encapsulated within the matrix phase; the volume percentage of the matrix phase in the solidified structure is not less than 40%; the average composition of the matrix phase mainly consists of Laₓ₁Mₐ₁; the composition of the dispersed particle phase mainly consists of Fe_{y2}T_{z2}Mₐ₂D_{b2}Laₓ₂, wherein x1, a1, x2, y2, z2, a2, and b2 represent the atomic percentage content of the corresponding constituent elements respectively, and 45% ≤ x1 ≤ 100%, 0% ≤ a1 ≤ 55%, 50% ≤ y2 ≤ 98%, 0.2% ≤ z2 < 50%, 0% ≤ a2 ≤ 30%, 0% ≤ b2 ≤ 35%, and 0 < x2 ≤ 5%; the dispersed particle phase includes a significant amount of spherical or near-spherical dispersed particle phase, with some spherical or near-spherical dispersed particle phase exhibiting certain dendritic features; the particle size of the dispersed particle phase ranges from 5 nm to 50 µm;
Step 3: removing the matrix phase from the initial alloy solid, retaining mainly the dispersed particle phase to obtain an iron alloy powder material with the main composition of Fe_{y2}T_{z2}Mₐ₂D_{b2}Laₓ₂, wherein 50% ≤ y2 ≤ 98%, 0.2% ≤ z2 < 50%, 0% ≤ a2 ≤ 30%, 0% ≤ b2 ≤ 35%, and 0 < x2 ≤ 5%; the iron alloy powder particles include a significant amount of spherical or near-spherical particles, with some spherical or near-spherical iron alloy powder particles exhibiting certain dendritic features; the particle size of the iron alloy powder particles ranges from 5 nm to 50 µm.

In Step 1:
Further, T includes Cr; furthermore, T includes V;
Furthermore, M includes Al; furthermore, M includes Ni; furthermore, M includes Co; furthermore, M includes Si;
Furthermore, 0 < a ≤ 40%; furthermore, 2.5% < a ≤ 40%, 18% ≤ x ≤ 93.3%; furthermore, 5% < a ≤ 40%, 18% ≤ x ≤ 90.8%; furthermore, 10% < a ≤ 40%, 18% ≤ x ≤ 85.8%;
Furthermore, D includes Mo; furthermore, D includes W; furthermore, D includes Ti;
Furthermore, 0 < b ≤ 15%; furthermore, 0.5% < b ≤ 15%, 18% ≤ x ≤ 95%;
Furthermore, 18% ≤ x ≤ 93.8%, 6% ≤ y ≤ 81.8%; preferably, 18% ≤ x ≤ 89.8%, 10% ≤ y ≤ 81.8%;
Furthermore, 18% ≤ x ≤ 95%, 0.5% ≤ z ≤ 35%; furthermore, 18% ≤ x ≤ 94%, 1% ≤ z ≤ 35%; preferably, 18% ≤ x ≤ 92%, 3% ≤ z ≤ 35%; preferably, 18% ≤ x ≤ 90%, 5% ≤ z ≤ 35%;
Furthermore, 18% ≤ x ≤ 80%; furthermore, 18% ≤ x ≤ 70%; furthermore, 18% ≤ x ≤ 60%; furthermore, 18% ≤ x ≤ 50%.

Since rare earth La has large atoms, even at a relatively low atomic percentage in the initial alloy melt, it corresponds to a large volume percentage, which is key to determining whether the dispersed particle phase can be evenly distributed. For example, in an alloy with an atomic composition of La₂₀Fe₇₅Cr₅, the volume percentage of the La matrix can be calculated to be 44.35% based on the atomic weights and densities of the elements. When most M-type elements also enter the matrix phase, the volume percentage of the matrix phase can be further increased.

Further, y > z, meaning that the atomic percentage of Fe in the initial alloy melt is higher than that of T-type elements.

In Step 2:
According to the La-Fe, La-Cr, La-V, Fe-Cr, Fe-V, and Cr-V phase diagrams, the melting points of Fe, Cr, and V are all higher than that of La. Fe, Cr, and V do not form intermetallic compounds with La, nor do they significantly dissolve in La. Moreover, Fe-Cr, Fe-V, and Cr-V all form an infinitely soluble alloy system. Therefore, during the solidification process of the initial alloy melt, a dispersed particle phase primarily composed of Fe, Cr, and V is first precipitated from the alloy melt, while the matrix phase primarily composed of La solidifies last, and the solidified alloy structure does not contain intermetallic compounds formed by La with Fe, Cr, or V. In other words, during the process of solidifying the initial alloy melt into an initial alloy solid using rapid solidification technology, the solidified structure of the initial alloy solid includes a La-rich matrix phase and a Fe, Cr, or (and) V-rich dispersed particle phase, where the matrix phase has a lower melting point than the dispersed particle phase, and the dispersed particle phase is encapsulated within the matrix phase.

Further, the solidification rate of the initial alloy melt is greater than 20 K/s; preferably, the solidification rate of the initial alloy melt is greater than 50 K/s; more preferably, the solidification rate of the initial alloy melt is greater than 100 K/s; more preferably, the solidification rate of the initial alloy melt is greater than 250 K/s; most preferably, the solidification rate of the initial alloy melt is greater than 500 K/s.

Further, the shape of the initial alloy solid has at least one dimension less than 10 mm in the three-dimensional direction; preferably, the shape of the initial alloy solid has at least one dimension less than 5 mm in the three-dimensional direction; more preferably, the shape of the initial alloy solid has at least one dimension less than 2 mm in the three-dimensional direction; more preferably, the shape of the initial alloy solid has at least one dimension less than 1 mm in the three-dimensional direction; more preferably, the shape of the initial alloy solid has at least one dimension less than 500 µm in the three-dimensional direction; more preferably, the shape of the initial alloy solid has at least one dimension less than 100 µm in the three-dimensional direction.

The higher the solidification rate of the initial alloy melt, the smaller the minimum dimension of the initial alloy solid shape in the three-dimensional direction. For example, using the copper roll rapid solidification method at a solidification rate of about 10⁶ K/s to 10⁷ K/s, an initial alloy solid thin strip with a thickness of about 25 µm can be obtained; using the copper mold casting method at a solidification rate of about 100 K/s, an alloy rod with a diameter of about 5 mm or a thick plate with a thickness of about 5 mm can be obtained. Generally speaking, the particle size of the dispersed particle phase is inversely related to the solidification rate of the initial alloy melt, meaning that the higher the solidification rate of the initial alloy melt, the smaller the particle size of the dispersed particle phase. However, different elements with different solubilities or the same element with different solubility levels may obstruct the normal growth of the dispersed particle phase in certain aspects in different ways, which may cause some variation in this rule. For example, the spheroidization trend may lead to the merging and re-spheroidization of the particle phase during solidification, or inhibit the nucleation rate and increase the growth rate. For instance, without the solid solution of certain elements, the average particle size of the dispersed particle phase obtained at a certain cooling rate is 1 µm, but after the solid solution of certain elements, spherical dispersed particle phases with an average particle size of 5 µm can be obtained at the same cooling rate.

Further, the shape of the initial alloy solid includes at least one of the following: strip-shaped, ribbon-shaped, sheet-shaped, wire-shaped, or particle-shaped; preferably, the shape of the initial alloy solid includes at least one of the following: strip-shaped, ribbon-shaped, or sheet-shaped.

Further, the solidification technology used to prepare the initial alloy solid includes at least one of the following: melt spinning, rapid quenching, casting, continuous casting, atomization powder-making, or melt drawing.

Further, the initial alloy solid is in a strip or ribbon shape, with a thickness of 5 µm to 5 mm.

Further, the volume percentage of the matrix phase in the solidified structure is not less than 45%; preferably, the volume percentage of the matrix phase in the solidified structure is not less than 50%.

Further, 0 < x2 < x < x1, meaning that during the solidification process of the initial alloy melt, La is enriched in the matrix phase, while a small amount of La is also present in the dispersed particle phase.

Since La in the matrix phase is a large atom, even if the atomic percentage of La in the matrix phase is as low as 45%, the volume percentage of La still far exceeds 50% when calculated by volume percentage, so the matrix phase is still mainly composed of La.

Further, 50% ≤ x1 ≤ 100%, 0% ≤ a1 ≤ 50%.

Further, the La element exists in the Fe_{y2}T_{z2}Mₐ₂D_{b2}Laₓ₂ dispersed particle phase in the form of a solid solution.

Further, 0 < x2 ≤ 3%.

Further, 0 < y < y2, meaning that during the solidification process of the initial alloy melt, Fe is enriched in the Fe_{y2}T_{z2}Mₐ₂D_{b2}Laₓ₂ dispersed particle phase.

Further, 50% ≤ y2 ≤ 95%; preferably, 50% ≤ y2 ≤ 90%; preferably, 50% ≤ y2 ≤ 85%; preferably, 50% ≤ y2 ≤ 75%.

Further, 0 < z < z2, meaning that during the solidification process of the initial alloy melt, T-type elements are enriched in the Fe_{y2}T_{z2}Mₐ₂D_{b2}Laₓ₂ dispersed particle phase.

Further, 1% ≤ z2 < 50%; preferably, 3% ≤ z2 < 50%; preferably, 5% ≤ z2 < 50%; preferably, 10% ≤ z2 < 50%.

Further, y2 > z2, meaning that the atomic percentage of Fe in the Fe_{y2}T_{z2}Mₐ₂D_{b2}Laₓ₂ dispersed particle phase is higher than the atomic percentage of T-type elements.

Further, T-type elements exist in the Fe_{y2}T_{z2}Mₐ₂D_{b2}Laₓ₂ dispersed particle phase in the form of a solid solution.

Further, when a = 0, a2 = a1 = 0; when 0 < a ≤ 40%, 0 < a2 < a1, meaning that during the solidification process of the initial alloy melt, M-type elements are enriched in the Laₓ₁Mₐ₁ matrix phase, while M-type elements also have a certain content in the Fe_{y2}T_{z2}Mₐ₂D_{b2}Laₓ₂ dispersed particle phase.

Further, 1% ≤ a2 ≤ 30%; preferably, 3% ≤ a2 ≤ 30%; preferably, 5% ≤ a2 ≤ 30%; preferably, 10% ≤ a2 ≤ 30%.

Further, M-type elements exist in the Fe_{y2}T_{z2}Mₐ₂D_{b2}Laₓ₂ dispersed particle phase in the form of a solid solution.

The characteristics of M-type elements are that during the solidification process of the initial alloy melt, M-type elements are enriched in the Laₓ₁Mₐ₁ matrix phase, while M-type elements also have a considerable content dissolved in the Fe_{y2}T_{z2}Mₐ₂D_{b2}Laₓ₂ dispersed particle phase.

Further, when b=0, b2 = b = 0; when 0 < b ≤ 15%, 0 < b < b2, meaning that during the solidification process of the initial alloy melt, D-type elements are enriched in the Fe_{y2}T_{z2}Mₐ₂D_{b2}Laₓ₂ dispersed particle phase.

Further, 0.5% ≤ b2 ≤ 35%; preferably, 1% ≤ b2 ≤ 35%; preferably, 3% ≤ b2 ≤ 35%; preferably, 5% ≤ b2 ≤ 35%.

Further, D-type elements exist in the Fe_{y2}T_{z2}Mₐ₂D_{b2}Laₓ₂ dispersed particle phase in the form of a solid solution.

Specifically, when 0<a≤40%, according to the Al-Fe and Si-Fe phase diagrams, Al and Si have high solubility in iron, while Fe-Ni and Fe-Co are completely miscible. Therefore, M-type elements can dissolve in the Fe-rich dispersed particle phase. According to the Al-La, Ni-La, Co-La, and Si-La phase diagrams, Al, Ni, Co, and Si can all form La-rich intermetallic compounds with La. Since the melting point of La-rich intermetallic compounds is lower than that of the Fe-rich dispersed particles, during the solidification of the initial alloy melt, the Fe-rich dispersed particle phase first dissolves a certain amount of M-type elements, and the remaining M-type elements then combine with La to form a La-rich intermetallic compound matrix. If there is excess La, the Laₓ₁Mₐ₁ matrix phase not only includes La-rich intermetallic compounds formed by M-type elements and La, but also includes the excess La phase.

When 0<b≤15%, according to the La-Ti, La-W, and La-Mo phase diagrams, Ti, W, and Mo do not form intermetallic compounds with La and do not significantly dissolve in it. Therefore, during the solidification of the initial alloy melt, Ti, W, and Mo do not enter the La-rich matrix phase. According to the Fe-Ti, Fe-Mo, and Fe-W phase diagrams, Ti and W have about 10 atomic percent solubility in Fe, and Mo has about 20 atomic percent solubility in Fe. At the same time, according to the Cr-Ti, Cr-Mo, and Cr-W phase diagrams, Cr is completely miscible with Ti, Mo, and W. According to the V-Ti, V-Mo, and V-W phase diagrams, V is also completely miscible with Ti, Mo, and W. Therefore, D-type elements Ti, W, and Mo have poor elemental affinity with La, good affinity with Fe, and excellent affinity with Cr and V. When the initial alloy melt contains D-type elements along with Fe, Cr, and V, during the solidification process of the initial alloy melt, the selected D-type elements will be enriched in the Fe_{y2}T_{z2}Mₐ₂D_{b2}Laₓ₂ dispersed particle phase.

It should be noted that although Ti, Zr, and Hf belong to the same group, and Zr and Hf do not form intermetallic compounds with La and do not significantly dissolve in it, they differ from Ti. Due to the almost negligible solubility of Zr and Hf in Fe, Cr, and V, they can only form intermetallic compounds with each other. Therefore, if the initial alloy melt contains Zr and Hf, Zr and Hf will hardly dissolve in the Fe_{y2}T_{z2}Mₐ₂D_{b2}Laₓ₂ dispersed particle phase. Instead, outside of the Fe_{y2}T_{z2}Mₐ₂D_{b2}Laₓ₂ dispersed particle phase, they will form additional dendritic intermetallic compound phases with Fe, Cr, and V, as shown in Comparative Example 3. These intermetallic compounds are not the iron alloy phases primarily concerned with solid-solution alloying in this application.

Similarly, although Nb, Ta, and V belong to the same group, and Nb and Ta do not form intermetallic compounds with La and do not significantly dissolve in it, they differ from Mo, W, Ti, and V. Due to the extremely low solubility of Nb and Ta in Fe, Cr, and V, they can only form intermetallic compounds with each other. Therefore, if the initial alloy melt contains Nb and Ta, the solubility of Nb and Ta in the Fe_{y2}T_{z2}Mₐ₂D_{b2}Laₓ₂ dispersed particle phase is very low, and they may only exist in minimal amounts or not at all. If the initial alloy melt contains a significant amount of Nb and Ta, apart from the minimal amount that may exist in the Fe_{y2}T_{z2}Mₐ₂D_{b2}Laₓ₂ dispersed particle phase, they will also form dendritic intermetallic compound phases with Fe, Cr, and V, as shown in Comparative Example 4. These intermetallic compounds are not the iron alloy phases primarily concerned with solid-solution alloying in this application.

When the initial alloy melt contains only La and Fe, and the solidification rate of the alloy melt exceeds 10⁶ K/s, a certain amount of nearly spherical Fe phase particles with a nanoscale dimension (below 90 nm) can be obtained with insufficient dendritic growth. At such a high cooling rate, even though the Fe phase particles have a strong tendency for dendritic growth, they do not have time to grow fully and thus solidify and precipitate as nearly spherical Fe phase particles with insufficient dendritic growth at the nanoscale. However, since both La and Fe are easily oxidized and readily react with acid solutions, even if an initial alloy solid composed of La matrix and nearly spherical Fe phase particles below 90 nm is prepared by ultrahigh solidification rates, it is difficult to separate the La matrix from the nearly spherical Fe phase particles by reaction with acid solutions while retaining the nearly spherical Fe phase particles (as the nano Fe phase particles will also dissolve).

Generally speaking, when the solidification rate of a pure La-Fe alloy melt is below 10⁶ K/s, it can only obtain dendritic Fe phase particles, making it difficult to obtain spherical or nearly spherical Fe phase particles. For example, even if the solidification rate of the La-Fe alloy melt is as high as 10⁵ K/s and a La-Fe alloy strip of about 100 µm is obtained, the shape of the dispersed particles within it remains primarily dendritic, as shown in Comparative Example 2. If the solidification rate of the La-Fe alloy melt is below 500 K/s, the dispersed particle phase will grow fully into large dendritic phases, and after the matrix phase is removed, the obtained dendritic Fe phase will be intertwined dendritic fibers, as shown in Comparative Example 1.

When the initial alloy melt contains La and Fe, as well as high-melting-point elements such as Cr, V, Mo, W, and Ti, especially when it contains T-type elements like Cr or V that can form a complete solid solution with Fe, the primary particles that precipitate during the solidification of the initial alloy melt are Fe-rich and contain dissolved T-type elements. Due to the special solid solution behavior of T-type elements, the original lattice formation is disrupted, which hinders the growth of the Fe-rich dendritic phase along specific crystal orientations, leading to a tendency for the Fe-rich primary particles with dissolved T-type elements to become spherical. The higher the content of T-type elements in the Fe-rich primary phase, the larger the spherical or near-spherical dispersed particles that can be obtained at lower melt cooling rates. Therefore, T-type elements are key to the discovery that Fe-rich primary particles can be spheroidized, especially when the Fe-rich dispersed particles are relatively large.

Moreover, T-type elements include at least one of the corrosion-resistant elements Cr and V. The solid solution formed by these elements with Fe is essentially stainless steel (corrosion resistance of V is even higher than that of Cr). Therefore, the dissolution of T-type elements significantly enhances the corrosion resistance of the Fe-rich dispersed particles. Since the matrix phase is primarily composed of highly corrosive La, it can be easily corroded and removed by reacting with an acid solution, leaving behind the dispersed Fe-rich phase particles. Given the significantly enhanced corrosion resistance of the Fe-rich dispersed particles, a cooling rate greater than 10⁶ K/s can be used to prepare an initial alloy solid containing nano-sized Fe-rich spherical particles with T- and D-type elements. These nano-sized Fe-rich spherical particles, with their high corrosion resistance, can then be separated from the La-rich matrix through acid reaction, resulting in nano-sized Fe-rich spherical particles.

M-type elements include at least one of Al, Ni, Co, and Si, which are key elements in commercial iron alloys. For example, Al is a key element in Fe-Cr-AI electrical heating alloys and thermal spray coatings; Ni is a key element in austenitic stainless steel Fe-Cr-Ni; Co is a key element in Fe-Cr-Co permanent magnets; and Si is a key element in Fe-Cr-Si soft magnetic materials. According to actual research results, during the solidification of the initial alloy melt, since the matrix is also enriched with a significant amount of M-type elements, the atomic percentage of Si dissolved in the Fe-rich dispersed particles generally does not exceed 8%, and a large amount of Si needs to be added to the initial alloy melt to achieve this. The atomic percentage of Ni dissolved in the Fe-rich dispersed particles generally does not exceed 12%; Al and Co have a considerable solid solution in the Fe-rich dispersed particles (see examples), with atomic percentages that can even exceed 20%. Moreover, the required content of M-type elements in most of the aforementioned commercial iron alloys is not very high, making it possible to prepare commercial iron alloy powders that meet the related composition requirements.

When the initial alloy melt contains M-type elements, some of these M-type elements are also present in the Fe-rich dispersed particles through solid solution. Therefore, M-type elements generally have a positive effect on the spheroidization of Fe-rich dispersed particles, as seen in Examples 13 and 14. Moreover, since both M-type elements and La react easily with acid solutions, they can be removed from the matrix phase through an acid corrosion reaction, resulting in freely dispersed Fe-rich dispersed particles. If the chemical activity difference between La and M-type elements is used, and a suitable acid solution is applied to selectively remove primarily La from the matrix phase according to the dealloying principle, freely dispersed Fe-rich dispersed particle powder and nano-porous M composite powder can be obtained.

D-type elements include high-melting-point elements such as Mo, W, and Ti. Although these elements do not have as high a solubility in Fe as T-type elements (T-type elements are completely soluble in Fe), D-type elements have a solubility of 10%-20% in Fe and are completely soluble in T-type elements. Therefore, the appropriate addition of high-melting-point elements such as Mo, W, and Ti to the initial alloy melt can enhance the sphericity and corrosion resistance of the Fe-rich dispersed particles, while also significantly increasing the melting point and heat resistance of the Fe-rich dispersed particles. For example, Ti plays a role in the commercial austenitic stainless steel 1Cr18Ni9Ti, and Mo plays a role in the commercial ultra-high-temperature-resistant Fe-Cr-AI-Mo electrical heating alloy.

In summary, this application builds on the La-Fe alloy, with T-type elements, M-type elements, and D-type elements carefully selected and designed. This selection ensures that during the solidification of the initial alloy melt, Fe, T-type elements, and D-type elements are primarily present in the Fe_{y2}T_{z2}Mₐ₂D_{b2}Laₓ₂ dispersed particle phase, with M-type elements partially present in the Fe_{y2}T_{z2}Mₐ₂D_{b2}Laₓ₂ dispersed particle phase; La and M-type elements are primarily present in the Lax1 Ma1 matrix phase. At the same time, in the Fe_{y2}T_{z2}Mₐ₂D_{b2}Laₓ₂ dispersed particle phase, M-type elements have a considerable solid solution, while La has a low solid solution. This ingenious design ensures that the T-type elements guarantee the spheroidization tendency of the dispersed particles, while also improving their corrosion resistance, facilitating the separation of the dispersed particle phase from the matrix phase through a corrosion reaction.

The spheroidization of Fe-rich dispersed particles is achieved by suppressing the formation and growth of Fe-rich dendritic phases through the alloying of special solid solution elements and the regulation of the melt cooling rate. The higher the content of T-type elements dissolved in the Fe-rich dispersed particles, or the higher the total content of dissolved elements including T-type elements, or the higher the cooling rate of the melt, the easier it is to form spherical or near-spherical Fe-rich dispersed particles. Therefore, to achieve the same spheroidization effect, a lower cooling rate can be used when the content of dissolved elements in the Fe-rich dispersed particles is higher, while a higher cooling rate is required when the content of dissolved elements is lower. In practice, by adjusting parameters, the volume percentage of spherical or near-spherical dispersed particles in all dispersed particles can approach 100%, but it cannot reach 100%.

Furthermore, the sphericity of the spherical or near-spherical dispersed particles exceeds 50%; Furthermore, the sphericity of the spherical or near-spherical dispersed particles exceeds 70%; Furthermore, the sphericity of the spherical or near-spherical dispersed particles exceeds 85%; Furthermore, the sphericity of the spherical or near-spherical dispersed particles exceeds 95%; Furthermore, the volume percentage of spherical or near-spherical dispersed particles in all dispersed particles is greater than 10%.

Note: For convenience in expression, the term "spherical" is used in some parts of this application, and "spherical or near-spherical" is used in others. In fact, throughout this application, "spherical" includes both spherical and near-spherical, as there is no ideal sphere in reality.

Pure La-Fe alloys hardly form spherical dispersed particles through the described method, or they require an extremely high cooling rate to obtain near-spherical Fe-phase particles smaller than 90 nm. Additionally, these particles are difficult to separate from the La matrix through acid reaction to obtain such nanoparticles (nano-Fe particles would also react with acid and dissolve). Therefore, through alloy design and the addition of corrosion-resistant elements like Cr or V, or with the addition of a significant amount of D-type elements, if the volume percentage of spherical or near-spherical dispersed particles in all dispersed particles exceeds 10%, it can be considered that a substantial amount of spherical or near-spherical dispersed particles has been obtained.

Furthermore, the volume percentage of spherical or near-spherical dispersed particles in all dispersed particles exceeds 25%; Furthermore, the dispersed particles are primarily spherical or near-spherical in shape; Furthermore, the volume percentage of spherical or near-spherical dispersed particles in all dispersed particles exceeds 50%; Furthermore, the volume percentage of spherical or near-spherical dispersed particles in all dispersed particles exceeds 75%; Furthermore, the volume percentage of spherical or near-spherical dispersed particles in all dispersed particles exceeds 90%; Furthermore, the volume percentage of spherical or near-spherical dispersed particles in all dispersed particles exceeds 95%.

Generally speaking, when the content of T-type elements dissolved in the Fe-rich dispersed particles exceeds 2%, or the total content of dissolved elements including T-type elements exceeds 4%, and the melt cooling rate exceeds 500K/s, the volume percentage of spherical or near-spherical dispersed particles in all dispersed particles exceeds 50%.

Furthermore, when the content of T-type elements dissolved in the Fe-rich dispersed particles exceeds 4%, or the total content of dissolved elements including T-type elements exceeds 8%, and the melt cooling rate exceeds 250K/s, the volume percentage of spherical or near-spherical dispersed particles in all dispersed particles exceeds 50%.

Furthermore, when the content of T-type elements dissolved in the Fe-rich dispersed particles exceeds 8%, or the total content of dissolved elements including T-type elements exceeds 12%, and the melt cooling rate exceeds 100K/s, the volume percentage of spherical or near-spherical dispersed particles in all dispersed particles exceeds 50%.

Furthermore, when the content of T-type elements dissolved in the Fe-rich dispersed particles exceeds 12%, or the total content of dissolved elements including T-type elements exceeds 18%, and the melt cooling rate exceeds 50K/s, the volume percentage of spherical or near-spherical dispersed particles in all dispersed particles exceeds 50%.

Furthermore, when the content of T-type elements dissolved in the Fe-rich dispersed particles exceeds 16%, or the total content of dissolved elements including T-type elements exceeds 25%, and the melt cooling rate exceeds 20K/s, the volume percentage of spherical or near-spherical dispersed particles in all dispersed particles exceeds 50%.

Furthermore, when the content of T-type elements dissolved in the Fe-rich dispersed particles exceeds 16%, or the total content of dissolved elements including T-type elements exceeds 25%, and the melt cooling rate exceeds 100K/s, the volume percentage of spherical or near-spherical dispersed particles in all dispersed particles exceeds 95%.

Furthermore, when the average particle size of the dispersed phase exceeds 0.25µm, it is still possible to obtain dispersed particles with a sphericity of over 85%; Furthermore, when the average particle size of the dispersed phase exceeds 0.25µm, it is still possible to obtain dispersed particles with a sphericity of over 85% through the regulation of cooling rate and alloy composition; Furthermore, when the average particle size of the dispersed phase exceeds 0.5µm, it is still possible to obtain dispersed particles with a sphericity of over 85% through the regulation of cooling rate and alloy composition; Furthermore, when the average particle size of the dispersed phase exceeds 1µm, it is still possible to obtain dispersed particles with a sphericity of over 85% through the regulation of cooling rate and alloy composition; Furthermore, when the average particle size of the dispersed phase exceeds 3µm, it is still possible to obtain dispersed particles with a sphericity of over 85% through the regulation of cooling rate and alloy composition.

Furthermore, some of the spherical or near-spherical dispersed particles have dendritic features, meaning that certain spherical or near-spherical dispersed particles exhibit protruding short dendrites, giving the entire spherical or near-spherical dispersed particle a shape similar to that of a "coronavirus" (the protruding short dendrites correspond to the crown-like protrusions on the coronavirus particles).

Furthermore, the number of protruding short dendrites can be one or more, and their protrusion length from the spherical surface is less than the radius of the spherical particle; for specific shapes, see the examples. Furthermore, the number of protruding short dendrites can be one or more, and their protrusion length from the spherical surface is less than half of the spherical particle's radius.

Although these insufficiently spheroidized protruding short dendrites affect the sphericity of the particle phase to some extent, since the sphericity of the spherical particle phase to which the protruding short dendrites are attached is itself very high, and the protruding short dendrites are relatively short and generally symmetrically and uniformly distributed on the particle surface, particles with these insufficiently spheroidized protruding short dendrites still belong to the category of highly spherical or near-spherical particles and are included in the statistical range of spherical or near-spherical particles.

Furthermore, the shape of the dispersed particles is mainly spherical or near-spherical; in addition, the dispersed phase also contains a small amount of typical dendritic particles. These dendritic particles have a typical dendritic morphology, do not appear spherical, and are not included in the statistical range of spherical or near-spherical particles.

The dispersed particles are mainly spherical or near-spherical in shape, and some spherical or near-spherical dispersed particles contain certain dendritic features; at the same time, the dispersed phase also contains a small amount of typical dendritic particles. The presence of these two types of dendritic features is a unique characteristic of the Fe-rich dispersed phase obtained through this application.

Furthermore, the protrusion length of the protruding short dendrites from the spherical surface is less than one-third of the spherical particle's radius; Furthermore, the protrusion length of the protruding short dendrites from the spherical surface is less than one-fifth of the spherical particle's radius.

Furthermore, the particle size of the dispersed phase ranges from 5nm to 40µm; Furthermore, the particle size of the dispersed phase ranges from 5nm to 30µm; Furthermore, the particle size of the dispersed phase ranges from 5nm to 20µm; Furthermore, the particle size of the dispersed phase ranges from 5nm to 10µm; Furthermore, the particle size of the dispersed phase ranges from 100nm to 50µm; Furthermore, the particle size of the dispersed phase ranges from 250nm to 50µm; Furthermore, the particle size of the dispersed phase ranges from 500nm to 50µm; Furthermore, the particle size of the dispersed phase ranges from 5nm to 100nm; Furthermore, the particle size of the dispersed phase ranges from 5nm to 50nm.

Since the size of the dispersed phase is inversely related to the solidification rate of the initial alloy melt, i.e., the higher the solidification rate, the smaller the particle size of the dispersed phase, the smaller the particle size of the dispersed phase, the higher the solidification rate of the initial alloy melt, and the higher the corresponding spheroidization rate of the dispersed phase, the higher the volume percentage of spherical or near-spherical dispersed particles in all dispersed particles.

Furthermore, the proportion of single crystal particles in the dispersed phase is not less than 60% of the total number of particles.

In Step Three, since the iron alloy powder material, with the primary components of Fe_{y2}T_{z2}Mₐ₂D_{b2}Laₓ₂, is obtained by removing the matrix phase from the initial alloy solid and retaining the dispersed phase, the characteristics (including particle shape) of the iron alloy powder material correspond to those of the dispersed phase described in Step Two. These characteristics are detailed in Step Two.

Furthermore, the method of removing the matrix phase and retaining the dispersed phase includes at least one of acid solution dissolution and matrix oxidation-pulverization removal.

When using an acid solution for removal, an appropriate type and concentration of acid are chosen. The selection criteria ensure that the matrix phase, primarily composed of Laₓ₁Mₐ₁, dissolves into ions in the solution, while the dispersed phase, primarily composed of Fe_{y2}T_{z2}Mₐ₂D_{b2}Laₓ₂, does not react with the corresponding acid, thus achieving the removal of the matrix phase and obtaining iron alloy powder material primarily composed of Fe_{y2}T_{z2}Mₐ₂D_{b2}Laₓ₂. Alternatively, the appropriate acid type and concentration can be chosen to ensure that the matrix phase, primarily composed of Laₓ₁Mₐ₁, becomes nanoporous M (by mainly corroding La), while the dispersed phase, primarily composed of Fe_{y2}T_{z2}Mₐ₂D_{b2}Laₓ₂, does not react with the corresponding acid, resulting in a composite powder of nanoporous M and Fe_{y2}T_{z2}Mₐ₂D_{b2}Laₓ₂ dispersed particles.

When Cr or V is dissolved in Fe, the material forms ferritic stainless steel, and the dispersed phase, primarily composed of Fe_{y2}T_{z2}Mₐ₂D_{b2}Laₓ₂, exhibits excellent acid corrosion resistance. On the other hand, elements like La and M easily react with acid solutions, making it very easy to remove the La-rich matrix phase and obtain iron alloy powder material primarily composed of Fe_{y2}T_{z2}Mₐ₂D_{b2}Laₓ₂.

Since La easily oxidizes and pulverizes in the air, in addition to acid solution dissolution, the La-rich matrix phase in the initial alloy solid can also be removed by dry methods. After the La-rich matrix is oxidized and pulverized, the Fe-rich dispersed phase will automatically detach and can be collected based on its magnetic properties, thereby separating it from the La-rich matrix phase.

Furthermore, the oxidation-pulverization process of the La-rich matrix phase in the initial alloy solid can be accelerated through heat treatment. By applying heat treatment, the La-rich matrix phase can be rapidly oxidized and pulverized, thereby improving the separation efficiency. Due to the addition of elements such as Cr and V, the oxidation resistance of the Fe-rich particle phase is enhanced, and by controlling the heating temperature, the oxidation of the Fe-rich particles can be prevented.

Furthermore, the heat treatment temperature ranges from 50°C to 1000°C; preferably, the heat treatment temperature ranges from 50°C to 600°C; and more preferably, the heat treatment temperature ranges from 50°C to 200°C.

Furthermore, the volume percentage of spherical or near-spherical iron alloy powder particles in all iron alloy powder particles can be infinitely close to 100%, but not reach 100%. In other words, the shape of the iron alloy powder particles is mainly spherical or near-spherical, and some of the spherical or near-spherical iron alloy powder particles contain dendritic features that are not fully spheroidized.

Furthermore, the sphericity (roundness) of the spherical or near-spherical iron alloy powder particles exceeds 50%;

Furthermore, the sphericity of the spherical or near-spherical iron alloy powder particles exceeds 70%;

Furthermore, the sphericity of the spherical or near-spherical iron alloy powder particles exceeds 85%;

Furthermore, the sphericity of the spherical or near-spherical iron alloy powder particles exceeds 95%;

Furthermore, the volume percentage of spherical or near-spherical iron alloy powder particles in all iron alloy powder is greater than 10%;

Furthermore, the volume percentage of spherical or near-spherical iron alloy powder particles in all iron alloy powder is greater than 25%;

Furthermore, the shape of the iron alloy powder particles is mainly spherical or near-spherical;

Furthermore, the volume percentage of spherical or near-spherical iron alloy powder particles in all iron alloy powder is greater than 50%;

Furthermore, the volume percentage of spherical or near-spherical iron alloy powder particles in all iron alloy powder is greater than 75%;

Furthermore, the volume percentage of spherical or near-spherical iron alloy powder particles in all iron alloy powder is greater than 90%;

Furthermore, the volume percentage of spherical or near-spherical iron alloy powder particles in all iron alloy powder is greater than 95%.

Generally, when the content of T-type elements dissolved in iron alloy powder particles exceeds 2%, or the total content of dissolved elements including T-type elements exceeds 4%, and the cooling rate of the melt exceeds 500K/s, the volume percentage of spherical or near-spherical iron alloy powder particles in all iron alloy powder particles is greater than 50%.

Furthermore, when the content of T-type elements dissolved in iron alloy powder particles exceeds 4%, or the total content of dissolved elements including T-type elements exceeds 8%, and the cooling rate of the melt exceeds 250K/s, the volume percentage of spherical or near-spherical iron alloy powder particles in all iron alloy powder particles is greater than 50%.

Furthermore, when the content of T-type elements dissolved in iron alloy powder particles exceeds 8%, or the total content of dissolved elements including T-type elements exceeds 12%, and the cooling rate of the melt exceeds 100K/s, the volume percentage of spherical or near-spherical iron alloy powder particles in all iron alloy powder particles is greater than 50%.

Furthermore, when the content of T-type elements dissolved in iron alloy powder particles exceeds 12%, or the total content of dissolved elements including T-type elements exceeds 18%, and the cooling rate of the melt exceeds 50K/s, the volume percentage of spherical or near-spherical iron alloy powder particles in all iron alloy powder particles is greater than 50%.

Furthermore, when the content of T-type elements dissolved in iron alloy powder particles exceeds 16%, or the total content of dissolved elements including T-type elements exceeds 25%, and the cooling rate of the melt exceeds 20K/s, the volume percentage of spherical or near-spherical iron alloy powder particles in all iron alloy powder particles is greater than 50%.

Furthermore, when the content of T-type elements dissolved in iron alloy powder particles exceeds 16%, or the total content of dissolved elements including T-type elements exceeds 25%, and the cooling rate of the melt exceeds 100K/s, the volume percentage of spherical or near-spherical iron alloy powder particles in all iron alloy powder particles is greater than 95%.

Furthermore, some spherical or near-spherical iron alloy powder particles contain certain dendritic features, which refer to short dendritic protrusions growing on the spherical or near-spherical iron alloy powder particles, giving the entire spherical or near-spherical iron alloy powder particles a shape characteristic similar to that of a "coronavirus" (the short dendritic protrusions growing on the spherical or near-spherical iron alloy powder particles correspond to the crown-like protrusions on the surface of the coronavirus sphere). The specific shape of the short dendritic protrusions is described in the examples. Although these insufficiently spheroidized short dendritic protrusions affect the sphericity of the iron alloy powder particles to some extent, the sphericity of the iron alloy powder particles on which the short dendritic protrusions are attached is itself very high. Therefore, even if some spherical or near-spherical iron alloy powder particles contain certain short dendritic protrusions, these particles still belong to the category of highly spherical or near-spherical iron alloy powder particles.

Furthermore, the shape of the iron alloy powder particles is mainly spherical or near-spherical; in addition, the iron alloy powder particles also contain a small amount of typical dendritic powder particles.

The shape of the iron alloy powder particles is mainly spherical or near-spherical, and some spherical or near-spherical iron alloy powder particles contain certain dendritic features; at the same time, the iron alloy powder particles also contain a small amount of typical dendritic particles. The presence of these two dendritic morphological features is a unique characteristic of the iron alloy powder particles obtained through this application.

Furthermore, the particle size of the iron alloy powder particles ranges from 5nm to 40µm; furthermore, the particle size of the iron alloy powder particles ranges from 5nm to 30µm; furthermore, the particle size of the iron alloy powder particles ranges from 5nm to 20µm; furthermore, the particle size of the iron alloy powder particles ranges from 5nm to 10µm.

Furthermore, the particle size of the iron alloy powder particles ranges from 100nm to 50µm.

Furthermore, the particle size of the iron alloy powder particles ranges from 250nm to 50µm.

Furthermore, the particle size of the iron alloy powder particles ranges from 500nm to 50µm.

Furthermore, the particle size of the iron alloy powder particles ranges from 5nm to 100nm.

Furthermore, the particle size of the iron alloy powder particles ranges from 5nm to 50nm.

Furthermore, when the average particle size of the iron alloy powder particles is greater than 0.25µm, the shape of the powder particles is still predominantly spherical.

Furthermore, when the average particle size of the iron alloy powder particles is greater than 0.5µm, the shape of the powder particles is still predominantly spherical.

Furthermore, when the average particle size of the iron alloy powder particles is greater than 1µm, the shape of the powder particles is still predominantly spherical.

Furthermore, when the average particle size of the iron alloy powder particles is greater than 3µm, the shape of the powder particles is still predominantly spherical.

Furthermore, the proportion of single crystal particles among all particles in the iron alloy powder particles is no less than 60%.

Among all rare earth elements, La is an exception, and among iron group elements Fe, Co, and Ni, Fe is also an exception. This is because, among various combinations of iron group elements and rare earth elements, only La-Fe alloys do not form intermetallic compounds, and the two elements do not significantly solidify into each other. The utilization of this characteristic is the basis for forming La-rich matrix phases and Fe-rich dispersed phases in the solidification structure of the initial alloy. On this basis, by selecting and controlling the content of T-type elements, M-type elements, and D-type elements, the original dendritic particles in the initial alloy melt are transformed into spherical or near-spherical particles during solidification. This results in ultrafine spherical iron alloy powders with compositions similar to commercial alloys but with significantly different particle sizes (such as smaller size, lower oxygen impurities, and dissolved rare earth elements), which is the key to the inventive process. Without selecting and controlling T-type elements, M-type elements, and D-type elements and utilizing the spheronization effect of T-type elements, simply using La-Fe alloys would result in dendritic Fe powders that are easily corroded, with poor flowability and low powder metallurgy density, thus greatly limiting their practical value.

In practical processes, as a rare earth element raw material, La may also contain a small amount of other rare earth elements. As long as the atomic percentage of other rare earth elements does not exceed 25% of the La raw material content, the impact on the process is minimal. These other rare earths dissolve in La, partially replacing La. In this case, the term La in the invention represents La rare earths and other rare earths.

Furthermore, the composition of the initial alloy melt in step 1 also includes non-metallic impurity elements, which include at least one of O, N, H, P, S, Cl; the atomic percentage content of these non-metallic impurity elements in the initial alloy melt is greater than 0% and less than 10%. During the formation of the Fe-rich dispersed particle phase in step 2, these non-metallic impurity elements are concentrated in the La-rich matrix phase, thereby purifying the Fe-rich dispersed particle phase. That is, the atomic percentage content of non-metallic impurity elements in the Fe-rich dispersed phases is lower than in the initial alloy melt; and the atomic percentage content of non-metallic impurity elements in the Fe-rich dispersed particle phase is less than 1.5%. The content of non-metallic impurity elements in the spherical or near-spherical iron alloy powder particles in step 3 is also lower than the content of non-metallic impurity elements in the initial alloy melt.

Furthermore, the resulting iron alloy powder particles can be classified by particle size, such as separating powders larger than 10µm, powders between 1µm and 5µm, powders between 5µm and 10µm, and powders smaller than 1µm, to obtain spherical iron alloy powder materials of different sizes for various applications.

In its second aspect, the invention also relates to a spherical iron alloy powder material, wherein the spherical iron alloy powder material is prepared by using the preparation method described in the first aspect; some characteristics of the spherical iron alloy powder material include:
the main component of the spherical iron alloy powder material is Fe_{y2}T_{z2}Mₐ₂D_{b2}Laₓ₂; wherein 50% ≤ y2 ≤ 98%, 0.2% ≤ z2 < 50%, 0% ≤ a2 ≤ 30%, 0% ≤ b2 ≤ 35%, 0 < x2 ≤ 5%;
the shape of the iron alloy powder particles is mainly spherical or near-spherical, and some spherical or near-spherical iron alloy powder particles contain certain dendritic features;
the particle size of the iron alloy powder particles ranges from 5nm to 50µm.

Furthermore, the sphericity of the spherical or near-spherical iron alloy powder particles exceeds 65%.

Furthermore, the volume percentage of spherical or near-spherical iron alloy powder particles in all iron alloy powder particles is greater than 25%.

Furthermore, the total atomic percentage of O, N, H, P, S, and Cl elements in the spherical or near-spherical iron alloy powder particles is less than 1.5%.

Furthermore, T includes at least one of Cr or V, M includes at least one of Al, Ni, Co, or Si, and D includes at least one of Mo, W, or Ti; x1, a1, x2, y2, z2, a2, and b2 represent the atomic percentage content of the corresponding constituent elements respectively.

In its third aspect, the invention also relates to a method for preparing spherical iron-chromium-silicon powder materials with high silicon content. The method characterized in that the spherical iron alloy powder material prepared in steps 1 to 3 of claim 1, with Fe-Cr or low Si content Fe-Cr-Si as the main components, undergoes silicon infiltration treatment to obtain a high-Si-content spherical powder material with Fe-Cr-Si as the main component.

Since the silicon atomic percentage solubility in the Fe-Cr-Si spherical iron alloy powder materials obtained directly through steps one to three is difficult to exceed 8% and can only be achieved when a large amount of Si is present in the initial alloy melt, whereas commercially available Fe-Cr-Si magnetic iron alloy powders typically have Si atomic percentages exceeding 8%, a higher Si content can be achieved by performing silicon infiltration treatment on spherical iron alloy powder materials with a main composition of Fe-Cr or Fe-Cr-Si (low Si content) prepared in steps one to three.

Furthermore, the silicon infiltration treatment includes at least one of solid-state silicon infiltration, liquid-state silicon infiltration, or gas-phase silicon infiltration processes.

Furthermore, for solid-state silicon infiltration, the silicon source includes at least one of Si or silicon-rich alloys; for liquid-state silicon infiltration, the silicon source is primarily a Si-containing liquid; for gas-phase silicon infiltration, the silicon source is primarily a Si-containing gas.

Furthermore, the treatment temperature for solid-state silicon infiltration is between 400°C and 1200°C.

Additionally, the invention provides an improved silicon infiltration process:

The initial alloy solid described in step two of the first aspect is prepared according to steps one and two, wherein T includes Cr, M includes Si, and 0 < a ≤ 40%; the average composition of the matrix phase is mainly Laₓ₁Siₐ₁; and the composition of the dispersed phase is mainly low-Si-content Fe_{y2}Cr_{z2}Siₐ₂D_{b2}Laₓ₂; in the Laₓ₁Siₐ₁ matrix phase, Si combines with La through intermetallic compounds; 0 < a2 ≤ 8%; the La in the Laₓ₁Siₐ₁ matrix phase of the initial alloy solid is removed through dealloying reaction with a dilute acid solution, while Si in the original Laₓ₁Siₐ₁ matrix phase remains, forming a composite powder of nanoporous Si and the low-Si-content Fe_{y2}Cr_{z2}Siₐ₂D_{b2}Laₓ₂ particles; The nanoporous Si can then serve as a silicon source for the silicon infiltration of the low-Si-content Fe_{y2}Cr_{z2}Siₐ₂D_{b2}Laₓ₂ powder.

Furthermore, the nanoporous Si serves as a silicon source to perform silicon infiltration treatment on the low-Si-content Fe_{y2}Cr_{z2}Siₐ₂D_{b2}Laₓ₂ particles, resulting in high-Si-content spherical Fe-Cr-Si powder materials.

Furthermore, the solid-state silicon infiltration method with nanoporous Si and the low-Si-content Fe_{y2}Cr_{z2}Siₐ₂D_{b2}Laₓ₂ particles includes: direct solid-state silicon infiltration or first compacting the particles before performing solid-state silicon infiltration.

Furthermore, the treatment temperature for solid-state silicon infiltration is between 400°C and 1200°C.

Furthermore, the resulting high-Si-content spherical Fe-Cr-Si powder materials primarily have a composition of Fe_{y3}Cr_{z3}Siₐ₃D_{b3}Laₓ₃, where x3, y3, z3, a3, b3 represent the atomic percentage content of the corresponding constituent elements, and 0 < y3 < y2, 0 < z3 < z2, 0 < a2 < a3, 0 ≤ b3 ≤ b2, 0 < x3 < x2.

Furthermore, 5% < a3; further, 10% < a3.

Furthermore, the high-Si-content spherical Fe-Cr-Si powder material, in addition to having increased Si content through silicon infiltration treatment, results in an automatically adjusted alloy composition, while the powder material's morphology and size remain largely consistent with those before the silicon infiltration treatment.

Furthermore, since Si is brittle, after silicon infiltration treatment, the high-Si content spherical Fe-Cr-Si powder materials can be re-powderized into loose particles through dispersion and crushing techniques. Even if some unpenetrated residual nanoporous Si remains on the surface of the high-Si content spherical Fe-Cr-Si powder, it can sometimes be beneficial.

Furthermore, the high-Si-content spherical Fe-Cr-Si powder particles are classified by particle size, such as separating powders larger than 10 µm, 1 µm-5 µm powders, 5 µm-10 µm powders, and powders smaller than 1 µm, to obtain spherical Fe-Cr-Si powder materials with different particle sizes and high Si content, which can be applied in various fields.

In its fourth aspect, the invention also relates to a high-silicon-content spherical iron-chromium-silicon powder material. This material is characterized by being prepared through the method described in the third aspect for high-silicon-content spherical iron-chromium-silicon powder materials, with specific features as described in the third aspect.

In its fifth aspect, the invention also relates to a composite powder of nanoporous Si and spherical Fe-Cr-Si particles. It is characterized by being prepared through the silicon infiltration improvement process described in the third aspect, resulting in a composite powder of nanoporous Si and low-Si content Fe_{y2}Cr_{z2}Siₐ₂D_{b2}Laₓ₂ particles. Specific features are as described in the third aspect's silicon infiltration improvement process.

In its sixth aspect, the invention also relates to a preparation method for high-nickel-content iron-chromium-nickel powder metallurgy products, characterized by including the following steps:
Step 1: preparing the initial alloy solid described in step two of the first aspect according to steps one and two; wherein T includes Cr, M includes Ni, and 0 < a ≤ 40%; the average composition of the matrix phase is primarily Laₓ₁Niₐ₁; the composition of the dispersed phase is mainly low-Ni-content Fe_{y2}Cr_{z2}Niₐ₂D_{b2}Laₓ₂; in the Laₓ₁Niₐ₁ matrix phase, Ni combines with La through intermetallic compounds; and 0 < a2 ≤ 12%;
Step 2: removing La from the initial alloy solid Laₓ₁Niₐ₁ matrix phase using a dealloying reaction with a dilute acid solution, while ensuring that most of the Ni in the original Laₓ₁Niₐ₁ matrix phase remains, resulting in a composite powder of nanoporous Ni and low-Ni-content Fe_{y2}Cr_{z2}Niₐ₂D_{b2}Laₓ₂ particles;
Step 3: pressing and sintering the composite powder of nanoporous Ni and low-Ni-content Fe_{y2}Cr_{z2}Niₐ₂D_{b2}Laₓ₂ particles to obtain a high-Ni-content iron-chromium-nickel powder metallurgy products with a main composition of Fe_{y3}Cr_{z3}Niₐ₃D_{b3}Laₓ₃; x3, y3, z3, a3, b3 represent the atomic percentage content of the corresponding elements respectively, and 0 < y3 < y2, 0 < z3 < z2, 0 < a2 < a3, 0 ≤ b3 ≤ b2, 0 < x3 < x2.

In the initial alloy melt solidification process described in the first aspect, due to the enrichment of Ni in the matrix, the atomic percentage solubility of Ni in the Fe-rich dispersed phase generally does not exceed 12%. Typically, Ni content in Fe-Ni-based high-temperature alloys needs to reach 30%-40%. Therefore, by increasing the Ni content in low-Ni content Fe_{y2}Cr_{z2}Niₐ₂D_{b2}Laₓ₂ particles using this method, high-Ni content iron-chromium-nickel powder metallurgy products suitable for high-temperature alloys can be obtained.

In Step 1:
Further, 18% ≤ x ≤ 85%, 10% ≤ y ≤ 81.8%, 5% ≤ a ≤ 40%; 2% ≤ z ≤ 35%, 0 ≤ b ≤ 15%; 45% ≤ x1 ≤ 100%, 0% ≤ a1 ≤ 55%, 50% ≤ y2 ≤ 85%, 4% ≤ z2 < 50%;
Furthermore, in the Laₓ₁Niₐ₁ matrix phase, Ni combines with La through intermetallic compounds, which include at least one of the following: La₃Ni intermetallic compound, La ₇ Ni₃ intermetallic compound, or LaNi intermetallic compound.

In Step 2:
Although both La and Ni can react with acids, the reactivity of the rare earth La is higher, and the intermetallic compound typically contains more La. Therefore, by adjusting the type and concentration of the dilute acid, La can be removed through a de-alloying reaction, with only a small amount of Ni being inevitably dissolved. Most of the Ni can be retained as nanoporous Ni. The low-Ni content Fe_{y2}Cr_{z2}Niₐ₂D_{b2}Laₓ₂ particles, containing Cr, are corrosion-resistant and can be completely retained.

Further, the nanoporous Ni has a particle size less than 200 nm.

Since the nanoporous Ni becomes significantly fragmented after the de-alloying reaction and cannot be retained as a complete matrix, the resulting composite powder of nanoporous Ni and low-Ni content Fe_{y2}Cr_{z2}Niₐ₂D_{b2}Laₓ₂ particles will have the low-Ni content particles freely separated and mixed with nanoporous Ni fragments.

In Step 3:
Furthermore, the pressing and sintering treatment can be carried out sequentially or simultaneously; simultaneous processing is known as hot pressing sintering.

Furthermore, the sintering treatment temperature is below the melting point of the low-Ni content Fe_{y2}Cr_{z2}Niₐ₂D_{b2}Laₓ₂ particles.

Further, the sintering treatment temperature ranges from 400°C to 1400°C.

Further, the sintering treatment temperature ranges from 400°C to 1100°C.

Further, the sintering treatment temperature ranges from 400°C to 900°C.

Further, during the sintering process, the nanoporous Ni infiltrates into the low-Ni content Fe_{y2}Cr_{z2}Niₐ₂D_{b2}Laₓ₂ particles and solid dissolves within them, increasing the nickel content.

Further, 10% < a3; further, 15% < a3; further, 20% < a3; further, 30% < a3.

In its seventh aspect, the invention also relates to a high-nickel content iron-chromium-nickel powder metallurgy product, characterized by being prepared using the preparation method described in the sixth aspect. The specific features are as described in the sixth aspect.

In its eighth aspect, the invention also relates to a composite powder of nanoporous Ni and low-Ni content iron-chromium-nickel particles, characterized by being prepared through steps 1 and 2 of the method described in the sixth aspect. The specific features are as described in the sixth aspect.

In its ninth aspect, the invention also relates to the application of the spherical iron alloy powder material described in the second aspect in any of the following fields: ordinary powder metallurgy, metal injection molding (MIM), 3D printing, magnetic materials, heat-resistant materials, high-temperature alloys, coatings, and wave-absorbing materials.

In ordinary powder metallurgy, the spherical iron alloy powder materials related to the first and second aspects can be used. That is, the powder can be pressed into a compact and then directly sintered to produce a bulk powder metallurgy product of the corresponding composition, or the powder can be compounded with other powders, then pressed into a compact, and sintered to produce a bulk powder metallurgy product with the corresponding composite composition. The other powders include at least one of metal powders, alloy powders, oxide powders, carbide powders, nitride powders, carbon powders, or ceramic powders with other components.

In metal injection molding (MIM), the theoretically optimal powder particle size is 0.5 µm to 10 µm. However, due to technological limitations, the particle size of powders used in MIM is generally greater than 10 µm, even exceeding 50 µm. The method described in the invention is very suitable for producing powders in the 0.5 µm to 10 µm range, and finer powders are easier to produce. Therefore, the spherical iron alloy powder materials related to the first and second aspects are highly suitable for the metal injection molding (MIM) field. The difference between MIM technology and ordinary powder metallurgy is that MIM uses a mixture of powder and organic binder to make the compact, which is then sintered to produce the product after removing the organic binder. Due to the removal of the binder, there is a 10% to 20% volume shrinkage in the sintered product relative to the compact.

In 3D printing, fine powder for 3D printing typically requires spherical powders with particle sizes of about 15 µm to 53 µm. When the dissolved elements in Fe are high and the Cr and V content is high, spherical iron alloy powders within this particle size range can be obtained, and further screening can concentrate powders within this particle size range. Therefore, the spherical iron alloy powder materials related to the first and second aspects can also be used in 3D printing in certain cases.

In magnetic materials, the spherical iron alloy powder materials related to the first and second aspects can also be used in soft magnetic materials or hard magnetic materials (permanent magnets). For example, powders with a main composition of Fe-Cr or Fe-Cr-Si can be used for soft magnetic materials (such as magnetic powder cores), while powders with a main composition of Fe-Cr-Co can be used for hard magnetic materials.

Furthermore, when the iron alloy powder materials with a main composition of Fe-Cr or Fe-Cr-Si are used for soft magnetic materials, they can include applications as magnetic powder cores.

Furthermore, the magnetic powder cores are coated with an insulating coating material and then pressed at a certain temperature; the pressing temperature ranges from room temperature to 800°C.

Furthermore, the weight percentage of the insulating coating material in the magnetic powder core exceeds 0.1% and is less than 15%.

Furthermore, the insulating coating material includes resin; preferably, the insulating coating material includes at least one of silicone resin, phenolic resin, epoxy resin, polypropylene, or nylon.

In the field of heat-resistant materials, the spherical iron alloy powder materials related to the first and second aspects containing high melting point elements such as V, W, Mo, Ti, or those containing Al and capable of forming an alumina heat-resistant protective layer at high temperatures, such as spherical iron alloy powders with main elements of Fe-Cr-AI or Fe-Cr-AI-(V/W/Mo/Ti), are used to significantly enhance heat resistance. These powders can be used in various industrial applications, such as heating furnaces, heat exchangers, fiber burners, and hot gas filtration systems. Particularly, in applications like exhaust catalyst metal honeycomb carriers, iron-chromium-aluminum alloy products offer significant advantages over traditional ceramic honeycomb carriers.

In the field of high-temperature alloys, the spherical iron alloy powder materials related to the first and second aspects containing high melting point elements such as V, W, Mo, Ti, like those with main elements of Fe-Cr-Ni-(V/W/Mo/Ti), exhibit excellent high-temperature resistance. When the composition of the spherical iron alloy powder materials related to the first and second aspects containing high melting point elements such as V, W, Mo, Ti matches or is close to that of high-temperature alloys, they can be used in high-temperature alloy applications.

In the field of coatings, the spherical iron alloy powder materials related to the first and second aspects can serve as key components in coatings, including thermal spray coatings, resin-based coatings, and magnetic shielding coatings.

In the field of wave-absorbing materials, the spherical iron alloy powder materials from the first and second aspects can be used as magnetic metal powders for wave-absorbing materials.

In its tenth aspect, the invention also relates to the application of the spherical iron alloy powder material described in the second aspect in the field of electrical heating materials, where the main composition includes Fe-Cr-Al.

In the field of electrical heating materials, powder materials related to the first and second aspects with main elements of Fe-Cr-AI or Fe-Cr-AI-(V/W/Mo/Ti) are excellent for use as electrical heating elements after being processed through powder metallurgy. For example, iron-chromium-aluminum electrical heating alloy components made from these powders with main elements of Fe-Cr-AI or Fe-Cr-AI-(V/W/Mo/Ti) can operate at temperatures above 1400°C. The high aluminum content in Fe-Cr-Al alloys provides high electrical resistivity, reaching up to 1.6 µΩ.m. High resistivity effectively converts electrical energy into thermal energy. Additionally, iron-chromium-aluminum alloys are cost-effective, being 20% to 25% cheaper than nickel-chromium alloys, which facilitates their widespread use. They also have good heat resistance, low density, and excellent high-temperature oxidation resistance, making them widely used in various industrial and household applications. For instance, in domestic settings, iron-chromium-aluminum powder metallurgy alloys are used in heating elements such as electric furnace wires, electric furnace rods, cooking plates, radiators, toasters, microwaves, water heaters, washing machines, boilers, and precision resistance components in automobiles.

In its eleventh aspect, the invention also relates to the application of the high-silicon content spherical iron-chromium-silicon powder materials described in the fourth aspect in magnetic materials.

Furthermore, when the high-silicon content spherical iron-chromium-silicon powder materials from the fourth aspect are used in soft magnetic materials, they can include applications as magnetic powder cores.

Furthermore, the magnetic powder cores are coated with an insulating coating material using the high-silicon content spherical iron-chromium-silicon powder materials and then pressed at a certain temperature; the pressing temperature ranges from room temperature to 800°C.

Furthermore, the weight percentage of the insulating coating material in the magnetic powder core exceeds 0.1% and is less than 15%.

Furthermore, the insulating coating material includes resin; preferably, the insulating coating material includes at least one of silicone resin, phenolic resin, epoxy resin, polypropylene, or nylon.

In its twelfth aspect, the invention also relates to the application of the high-nickel content iron-chromium-nickel powder metallurgy products described in the seventh aspect in high-temperature alloys.

High-temperature alloys mainly include nickel-based, iron-based, and nickel-iron-based high-temperature alloys. When the composition of the high-nickel content iron-chromium-nickel powder metallurgy products described in the seventh aspect of this invention is the same as or close to that of high-temperature alloys, they can be used in the high-temperature alloy field.

In its thirteenth aspect, the invention also relates to an alloy solid, characterized in that it is prepared by the method of preparing the initial alloy solid described in steps one and two of the first aspect; the specific features are detailed in the first aspect.

The specific features include preparation through the following steps:
Step 1: selecting the initial alloy raw materials, melting the initial alloy raw materials according to the initial alloy composition ratio to obtain a uniform initial alloy melt; the main components of the initial alloy melt are LaₓFe_{y}T_{z}MₐD_{b}, wherein T includes at least one of Cr or V, M includes at least one of Al, Ni, Co, or Si, and D includes at least one of Mo, W, or Ti; x, y, z, a, and b represent atomic percentage contents of the corresponding element respectively, and 18%≤x≤95.8%, 4%≤y≤81.8%, 0.1%≤z≤35%, 0≤a≤40%, 0≤b≤15%;
Step 2: Solidifying the initial alloy melt into an initial alloy solid using rapid solidification technology; the solidified structure of the initial alloy solid includes a matrix phase and a dispersed particle phase; the melting point of the matrix phase is lower than that of the dispersed particle phase, and the dispersed particle phase is encapsulated within the matrix phase; the volume percentage of the matrix phase in the solidified structure is not less than 40%; the average composition of the matrix phase mainly consists of Laₓ₁Mₐ₁; the composition of the dispersed particle phase mainly consists of Fe_{y2}T_{z2}Mₐ₂D_{b2}Laₓ₂, wherein x1, a1, x2, y2, z2, a2, and b2 represent the atomic percentage content of the corresponding constituent elements, and 45% ≤ x1 ≤ 100%, 0% ≤ a1 ≤ 55%, 50% ≤ y2 ≤ 98%, 0.2% ≤ z2 < 50%, 0% ≤ a2 ≤ 30%, 0% ≤ b2 ≤ 35%, and 0 < x2 ≤ 5%; the dispersed particle phase includes a significant amount of spherical or near-spherical dispersed particle phase, with some spherical or near-spherical dispersed particle phase exhibiting certain dendritic features; the particle size of the dispersed particle phase ranges from 5 nm to 50 µm.

Furthermore, the composition of the initial alloy melt in step one also includes non-metallic impurity elements, which include at least one of O, N, H, P, S, or Cl; the atomic percentage content of the non-metallic impurity elements in the initial alloy melt is greater than 0 and less than 10%; during the formation of the Fe-rich dispersed particle phase in step two, non-metallic impurity elements are concentrated in the La-rich matrix phase, thereby purifying the Fe-rich dispersed particle phase; that is, the atomic percentage content of the non-metallic impurity elements in the Fe-rich dispersed particle phase is lower than that in the initial alloy melt; and in the Fe-rich dispersed particle phase, the atomic percentage content of the non-metallic impurity elements is less than 1.5%.

In its fourteenth aspect, the invention also relates to the application of the spherical iron alloy powder material described in the second aspect in the field of magnetorheological fluids.

The characteristics of this spherical iron alloy powder material are detailed in the first and second aspects; some characteristics of the spherical iron alloy powder material include: the main component of the spherical iron alloy powder material is Fe_{y2}T_{z2}Mₐ₂D_{b2}Laₓ₂; wherein 50%≤y2≤98%, 0.2%≤z2<50%, 0%≤a2≤30%, 0%≤b2≤35%, 0<x2≤5%; the shape of the iron alloy powder particles is mainly spherical or near-spherical, with some spherical or near-spherical iron alloy powder particles exhibiting certain dendritic characteristics; the particle size of the iron alloy powder particles ranges from 5 nm to 100 nm; T includes at least one of Cr or V, M includes at least one of Al, Ni, Co, or Si, and D includes at least one of Mo, W, or Ti; x1, a1, x2, y2, z2, a2, b2 represent the atomic percentage content of the corresponding constituent elements respectively.

Preferably, the particle size of the spherical iron alloy powder particles is 5 nm to 50 nm; Further preferably, the particle size of the spherical iron alloy powder particles is 5 nm to 25 nm; Furthermore, 50%≤y2≤95%;

Furthermore, 1%≤z2+b2<50%; Furthermore, 2%≤z2+b2<50%; Furthermore, 3%≤z2+b2<50%;

Furthermore, 1%≤z2<50%; Furthermore, 2%≤z2<50%; Furthermore, 3%≤z2<50%;

In the field of magnetorheological fluids, the spherical iron alloy powder material described in the invention, which pertains to both its first and second aspects, can be used in this field. Specifically, this involves: mixing the spherical iron alloy powder with a carrier liquid and a surfactant evenly to obtain a magnetorheological fluid.

Furthermore, the carrier liquid includes at least one of water, ethanol, carbohydrates, fats, diester, or mercury.

Furthermore, the surfactant includes at least one of oleic acid, polyvinylpyrrolidone, polyethylene glycol, ethylene glycol, or sodium dodecylbenzenesulfonate.

Magnetic solid particles for magnetorheological fluids generally require nanometer-scale particles. Iron (Fe) is one of the best magnetic materials, but when nano Fe particles are used as magnetic solid particles in magnetorheological fluids, they are prone to oxidation, which leads to instability and poor application performance. This invention effectively addresses this problem. When the spherical Fe alloy powder particles are alloyed with a certain amount of corrosion-resistant elements such as Cr, V, Mo, W, and Ti, it not only makes the spherical shape more pronounced but also significantly improves the corrosion resistance of the nano Fe alloy powder particles. This improvement in corrosion resistance allows for the removal of the matrix from the alloy solid through acid corrosion while retaining the nano Fe alloy powder particles. Additionally, it makes it possible to use corrosion-resistant nano Fe alloy powder particles as magnetic solid particles in magnetorheological fluids.

In its fifteenth aspect, the invention also relates to a coronavirus-shaped spherical iron alloy powder particle, including the following features:

the main component of the coronavirus-like spherical iron alloy powder particle is Fe_{y2}T_{z2}Mₐ₂D_{b2}Laₓ₂, wherein 50%≤y2≤98%, 0.2%≤z2<50%, 0%≤a2≤30%, 0%≤b2≤35%, O<x2≤5%; T includes at least one of Cr or V, M includes at least one of Al, Ni, Co, or Si, D includes at least one of Mo, W, or Ti, La is the rare earth element La, and the coronavirus-like spherical iron alloy particles with the main component of Fe_{y2}T_{z2}Mₐ₂D_{b2}Laₓ₂ contains La in a solid solution; x1, a1, x2, y2, z2, a2, b2 represent the atomic percentage content of the corresponding constituent elements respectively;

the coronavirus-like spherical iron alloy powder particle include a main body part and a protruding part; the main body part is a spherical or nearly spherical sphere, and the protruding part consists of multiple protrusions grown in situ on the surface of the main body sphere; the spherical iron alloy powder particle has a coronavirus-like shape, wherein the multiple protrusions of the protruding part correspond to the multiple corona-like protrusions of a coronavirus; the diameter of the main body sphere of the coronavirus-like spherical iron alloy powder particle is 20 nm to 50 µm, and the height of the protrusions on the protruding part is less than 0.3 times the diameter of the main body sphere.

Furthermore, the number of protrusions on any single coronavirus-like spherical iron alloy powder particle exceeds 5;

Furthermore,, the number of protrusions on any single coronavirus-like spherical iron alloy powder particle exceeds 10;

Furthermore, the diameter of the main body sphere of the coronavirus-like spherical iron alloy powder particle is 50 nm to 15 µm;

Furthermore, the diameter of the main body sphere of the coronavirus-like spherical iron alloy powder particle is 200 nm to 10 µm;

Furthermore, the diameter of the main body sphere of the coronavirus-like spherical iron alloy powder particle is 200 nm to 5 µm;

Furthermore, any single protrusion on the protruding part consists of no more than one crystal grain, and the crystal structure and crystal plane orientation of this grain are the same as those of the sphere part it connects with.

Furthermore, the main body part and the protruding part of the coronavirus-like spherical iron alloy powder particle are both part of a large single crystal. Due to the consistent crystal structure and crystal plane orientation at the boundary between the main body and the protruding part, the main body sphere and the multiple protrusions of the coronavirus-like spherical iron alloy powder particle are considered to belong to a large single crystal.

Furthermore, the height of the protrusions on the protruding part is less than 0.2 times the diameter of the main body sphere.

The protrusions are dendritic, meaning that they are preferred growth points where spherical particles transition to dendritic particles. Alternatively, it can be understood that after the spherical particle grow to a certain stage, certain locations on the sphere become preferred growth points, resulting in protrusions growing according to the original crystal structure and crystal plane orientation of the growth points.

Furthermore, the diameter of the protrusions on the protruding part is less than 0.25 times the diameter of the main body sphere of the coronavirus-like spherical iron alloy powder particle.

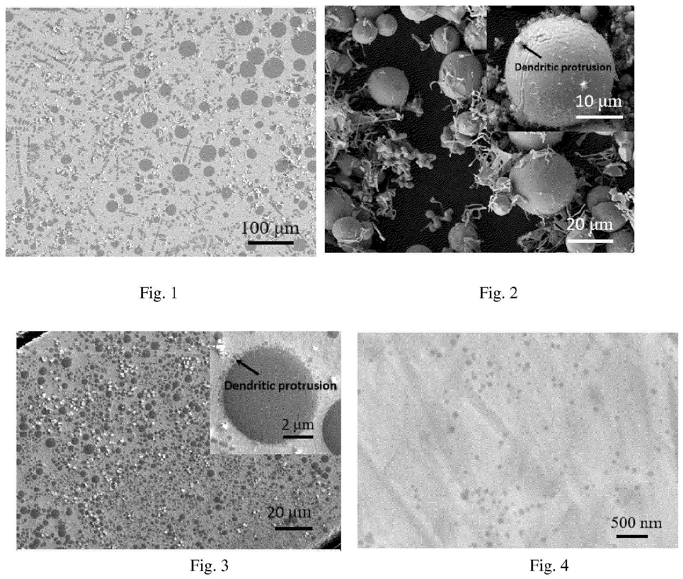

Furthermore, the morphological features of the coronavirus-like spherical iron alloy powder particle can be referenced from the shapes shown in Figures 3, 11, 12, and 15 of the examples.

Furthermore, the coronavirus-like spherical iron alloy powder particle is prepared by using the method described in the first aspect.

The beneficial effects of the present invention are mainly reflected in the following aspects:
The design by adding T-type elements achieves the precipitation and subsequent separation of corrosion-resistant, oxidation-resistant spherical or near-spherical Fe-rich dispersed particles in a La-rich matrix. The choice of T-type elements has several advantages: T-type elements are fully soluble with Fe and can be added in large amounts; T-type elements, like Fe, do not form any intermetallic compounds with La and almost do not enter the La-rich phase, only entering the Fe-rich dispersed particles; the solid solution of T-type elements makes the Fe-rich dispersed particles tend to become spherical, which is key to preparing spherical or near-spherical Fe alloy powders; T-type elements are fully soluble with D-type elements. When the solubility of D-type elements in Fe is 10%-20%, the presence of T-type elements allows more D-type elements to be solubilized in the Fe-rich dispersed particles; T-type elements like Cr and V are corrosion-resistant in Fe alloys. When they enter in the Fe-rich dispersed particles, they significantly improve the corrosion and oxidation resistance of these particles, making it possible to separate the Fe-rich dispersed particles from the La-rich matrix through acid etching or oxidize-pulverize process. Otherwise, pure Fe phases are also prone to react with acids and easy oxidized, especially when the particles are relatively small.

The spherical or near-spherical Fe alloy powders directly solubilize beneficial rare earth elements. Adding rare earth elements to Fe alloys promotes the performance of the materials. For example, adding a small amount of rare earth elements to Fe-Cr-Al electric heating alloys improves the alloy's performance. In industry, rare earth elements added to Fe alloys are prone to oxidation. When added in small amounts, rare earth elements generally combine with impurities like oxygen in the alloy, resulting in uneven distribution as oxide particles, which limits the improvement in alloy performance. However, in this application, the initial alloy melt contains a significant amount of La (with the volume percentage of the La-rich matrix phase being more than 40%). Therefore, the oxygen in the alloy melt mainly exists in the La-rich matrix, while a small amount of La is solid-solved in the spherical or near-spherical Fe alloy powders. This La, in atomic form, is uniformly solid-solved in the Fe alloy powders and acts as a truly alloying rare earth element, which has a more positive effect on the material's properties. The presence of solubilized rare earth elements (La) in the Fe alloy powders is one of the key features of the Fe alloy powder materials prepared by this invention.

The preparation of ultrafine Fe alloy powders primarily composed of spherical or near-spherical particles has been achieved. Spherical or near-spherical Fe alloy particles are advantageous due to their excellent flowability, uniformity, and powder stacking density, making them key raw materials for powder metallurgy, powder coating, powder spraying, metal injection molding (MIM), and 3D printing. Currently, spherical Fe alloy powders cannot be prepared by chemical methods and are primarily produced by atomization, which involves high-speed fluid directly breaking liquid metal or alloys to obtain metal powders. However, due to the limitations of atomization capabilities, it is generally suitable only for spherical Fe alloy powders with sizes between 10 µm and 150 µm. For powders smaller than 10 µm, especially around 1 µm, atomization methods are challenging or impossible. The technical solution provided in this application achieves the preparation of ultrafine spherical Fe alloy powders with sizes from the nanometer scale to several micrometers, and this ultrafine spherical Fe alloy powder can be produced on a large scale at low cost, which is of significant application importance.

Some of the spherical or near-spherical Fe alloy powder particles contain dendritic short branches. For powder metallurgy, especially MIM, the strength of the green body is a key factor for normal production. In MIM, green bodies are made by pressing metal powders with organic binders, followed by removal of the organic binder. The final product has high strength after sintering and shrinkage. Before sintering, the green body relies on the mechanical bonding between particles to maintain its shape after the organic binder is removed. If all metal powders are ideal spherical particles, the mechanical-friction bonding force between such ideal spherical particles is very weak, which can cause the green body to collapse. In this application, some spherical or near-spherical Fe alloy powder particles have dendritic short branches. This feature has little effect on the sphericity of the particles but significantly enhances the mechanical or frictional bonding force between particles, thus increasing the strength of the green body. If all particles had this dendritic feature, it could affect the powder flowability. The Fe alloy powders prepared in this application are well-balanced, with this dendritic short branch feature appearing only on some of the spherical or near-spherical Fe alloy powder particles. Thus, the dendritic short branches on some spherical Fe alloy powder particles are another key feature of the Fe alloy powders prepared by this invention.

During the formation of Fe-rich dispersed particles, a purification treatment is simultaneously performed. If the initial alloy is prepared from raw materials containing impurities like O, N, H, P, S, Cl, or with lower purity, or if such impurities are introduced during the melting process, it will not affect the final ability to obtain Fe-rich dispersed particles with low levels of these impurities, and thus, low-impurity spherical iron alloy powder materials can also be obtained. This is because the impurities in the raw materials or introduced during melting are mostly captured by the La-rich matrix during the solidification of the initial alloy melt, thus purifying the Fe-rich dispersed particles.

The process can yield Fe alloy powder materials predominantly composed of single-crystal particles. Compared to polycrystalline powders, single-crystal powders provide several significant and beneficial effects. During the solidification process of the initial alloy melt, each internal particle nucleates from a specific location in the melt and grows according to a particular atomic arrangement. By controlling the volume percentage of the matrix phase to ensure that each internal particle can be dispersed, it becomes difficult for the internal dispersed particles to bond or entangle. Therefore, the Fe-rich dispersed particles obtained are mostly single-crystalline. Even if dendritic short branches further grow on the spherical particles, they grow according to the fixed crystal orientation on the surface of the sphere, meaning the sphere and the dendritic branches are part of the same crystal grain. Polycrystalline materials generally have impurity elements along the grain boundaries, making it difficult to obtain high-purity polycrystalline powder materials. However, when the powder material mainly consists of single-crystal particles, its purity is assured. Moreover, single-crystal particle surfaces have specific atomic arrangements, such as (111) face arrangements, which confer unique mechanical, physical, and chemical properties to the material, resulting in beneficial effects.

In summary, the invention achieves the alloying of T-type, M-type, and D-type elements, as well as La, in a spherical or near-spherical Fe-rich dispersed particle phase by carefully designing and adding these elements to an alloy melt primarily composed of La and Fe. This improves the corrosion and oxidation resistance of the spherical or near-spherical Fe-rich dispersed particles and reduces impurity content. By removing the La-rich matrix phase, ultrafine spherical iron alloy powder materials with sizes ranging from hundreds of nanometers to several micrometers are obtained. These materials have excellent application prospects in fields such as powder metallurgy, metal injection molding (MIM), 3D printing, magnetic materials, heat-resistant materials, high-temperature alloys, coatings, electrical heating materials, and wave-absorbing materials.

**Note:** In aspects one to fourteen, T includes at least one of Cr or V, M includes at least one of Al, Ni, Co, or Si, and D includes at least one of Mo, W, or Ti.

### BRIEF DESCRIPTION OF THE DRAWINGS

Figure 1: backscattered SEM morphology of the initial alloy solidification structure in Example 1;
Figure 2: SEM morphology of the Fe alloy powder material prepared in Example 1;
Figure 3: backscattered SEM morphology of the initial alloy solidification structure in Example 2;
Figure 4: backscattered high-magnification SEM morphology of the matrix of the initial alloy solidification structure in Example 2;
Figure 5: backscattered SEM morphology of the initial alloy solidification structure in Example 3;
Figure 6: backscattered high-magnification SEM morphology of the matrix of the initial alloy solidification structure in Example 3;
Figure 7: backscattered SEM morphology of the initial alloy solidification structure in Example 4;
Figure 8: backscattered SEM morphology of the initial alloy solidification structure in Example 5;
Figure 9: backscattered SEM morphology of the initial alloy solidification structure in Example 6;
Figure 10: backscattered SEM morphology of the initial alloy solidification structure in Example 7;
Figure 11: backscattered SEM morphology of the initial alloy solidification structure in Example 8;
Figure 12: SEM morphology of the Fe alloy powder material in Example 8;
Figure 13: backscattered SEM morphology of the initial alloy solidification structure in Example 10;
Figure 14: backscattered SEM morphology of the initial alloy solidification structure in Example 11;
Figure 15: SEM morphology of the Fe alloy powder material in Example 11;
Figure 16: backscattered SEM morphology of the initial alloy solidification structure in Example 12;
Figure 17: backscattered SEM morphology of the initial alloy solidification structure in Example 13;
Figure 18: SEM morphology of the Fe alloy powder material in Example 13;
Figure 19: backscattered SEM morphology of the initial alloy solidification structure in Example 14;
Figure 20: backscattered SEM morphology of the initial alloy solidification structure in Example 15;
Figure 21: backscattered SEM morphology of the initial alloy solidification structure in Example 16;
Figure 22: SEM morphology of the Fe alloy powder material in Example 16;
Figure 23: backscattered SEM morphology of the initial alloy solidification structure in Comparative Example 1;
Figure 24: SEM morphology of Fe-rich dendrites in Comparative Example 1;
Figure 25: backscattered SEM morphology of the initial alloy solidification structure in Comparative Example 2;
Figure 26: backscattered SEM morphology of the initial alloy solidification structure in Comparative Example 3;
Figure 27: backscattered SEM morphology of the initial alloy solidification structure in Comparative Example 4;
Figure 28: high-magnification backscattered SEM morphology of the initial alloy solidification structure in Comparative Example 4.

### DETAILED DESCRIPTION OF PREFERRED EMBODIMENTS

The following examples further describe the invention in detail. It should be noted that the examples are provided to facilitate understanding of the invention and are not intended to limit its scope.

### Example 1

Using commercial La, Fe, and Cr materials, an initial alloy melt with a nominal atomic composition of La₅₀Fe₄₁Cr₉ was prepared. The melt was solidified at a cooling rate of about 100 K/s into an initial alloy sheet with a thickness of approximately 5 mm. The solidification structure of the initial alloy sheet is shown in Figure 1 and includes a dispersed particle phase primarily composed of Fe₇₉Cr₂₀La₁ and a La-rich matrix phase, where the matrix phase volume fraction exceeds 65%. Both Cr and La are solid-solution in the dispersed particle phase. The dispersed particle phase includes spherical and dendritic particles, with spherical particles comprising more than 50% of the volume fraction. The particle size range of the spherical particles is 15 nm to 60 µm.

The La matrix phase in the initial alloy sheet was removed by reaction with a 0.5 mol/L dilute hydrochloric acid solution, resulting in a dispersed Fe alloy powder material primarily composed of Fe₇₉Cr₂₀La₁. This powder includes spherical and dendritic particles, with spherical particles constituting more than 50% of the volume fraction. The particle size range of the spherical particles is 15 nm to 60 µm, as shown in Figure 2. Some spherical or near-spherical particles have certain dendritic features, such as the small dendritic protrusions shown in the inset of Figure 2. The prepared Fe alloy powder material is suitable for conventional powder metallurgy and metal injection molding (MIM) applications.

### Example 2

Using commercial La, Fe, and Cr materials, an initial alloy melt with a nominal atomic composition of La₅₀Fe₄₁Cr₉ was prepared. The melt was solidified using a chill roll method at a cooling rate of about 5000 K/s into an initial alloy strip with a thickness of approximately 200 µm. The solidification structure of the initial alloy strip is shown in Figure 3 and includes a dispersed particle phase primarily composed of Fe₇₇Cr₂₂La₁ and a La-rich matrix phase, where the matrix phase volume fraction exceeds 65%. The dispersed particle phase is almost entirely composed of spherical particles. Some spherical particles contain certain dendritic features, such as the small dendritic protrusions shown in the inset of Figure 3. The particle size range of the spherical particles is 15 nm to 10 µm. The matrix phase in Figure 3 was magnified, revealing some nanometer-sized spherical particles, as shown in Figure 4.

Using a 0.5 mol/L dilute sulfuric acid solution, the La matrix phase in the initial alloy strip was reacted and removed. This resulted in a dispersed Fe alloy powder material primarily composed of Fe₇₇Cr₂₂La₁, which consists almost entirely of spherical particles, with some spherical particles exhibiting certain dendritic features. The particle size range of the spherical particles is 15 nm to 10 µm. The prepared powder material is suitable for conventional powder metallurgy and metal injection molding (MIM) applications.

### Example 3

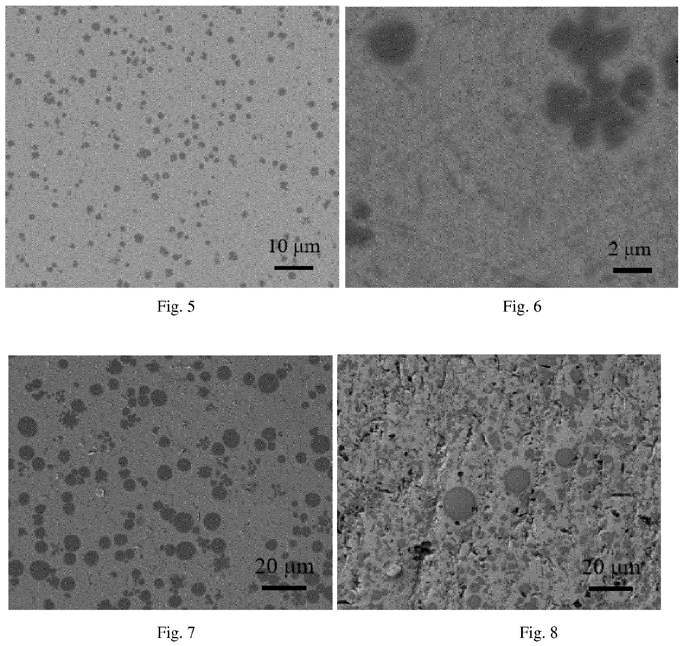

Using commercial La, Fe, and V materials, an initial alloy melt with a nominal atomic composition of La₆₇Fe₃₀V₃ was prepared. The melt was solidified at a cooling rate of about 1000 K/s into an initial alloy strip with a thickness of approximately 500 µm. The solidification structure of the initial alloy strip is shown in Figure 5 and includes a dispersed particle phase primarily composed of Fe_{88.5}V₉La_{1.5} and a La-rich matrix phase, where the matrix phase volume fraction exceeds 70%. The dispersed particle phase is primarily spherical, with a particle size range of 15 nm to 5 µm. Enlarging the matrix phase in Figure 5 reveals some nanometer-sized spherical particles, as shown in Figure 6 (with the matrix phase outside the nanometer-sized spherical particles). A small amount of the dispersed particles are dendritic.

The La matrix phase in the initial alloy strip was removed by reaction with a 0.5 mol/L dilute hydrochloric acid solution. This resulted in a dispersed Fe alloy powder material primarily composed of Fe_{88.5}V₉La_{1.5}, with a shape mainly of spherical particles and only a small amount of dendritic particles. The particle size range of the spherical particles is 15 nm to 5 µm.

### Example 4

Using commercial low-purity La, low-purity Fe, low-purity V, and low-purity Cr materials with high oxygen impurity, an initial alloy melt with a nominal atomic composition of La₆₇Fe₃₀Cr₃V₃ was prepared. The initial alloy melt, with a composition approximately La₆₅Fe₃₀Cr₃V₃O₂, was solidified at a cooling rate of about 250 K/s into an initial alloy thick strip with a thickness of approximately 3 mm. The solidification structure of the initial alloy thick strip is shown in Figure 7 and includes a dispersed particle phase primarily composed of Fe_{82.3}V₈Cr₈La_{1.5}O_{0.2} and a La-rich matrix phase enriched with oxygen impurities, where the matrix phase volume fraction exceeds 70%. The dispersed particle phase is primarily spherical, with a small amount of dendritic particles. The particle size range of the spherical particles is 15 nm to 15 µm, and some spherical particles have certain dendritic features.

The La-rich matrix phase in the initial alloy thick strip was removed by reaction with a 0.2 mol/L dilute nitric acid solution. This resulted in a dispersed Fe alloy powder material primarily composed of Fe_{82.3}V₈Cr₈La_{1.5}O_{0.2}, with a shape mainly of spherical particles and a small amount of dendritic particles. Some spherical particles exhibit certain dendritic features. The particle size range of the spherical particles is 15 nm to 15 µm.

### Example 5

Using commercial La, Fe, Cr, and Mo materials, an initial alloy melt with a nominal atomic composition of La₅₀Fe₄₀Cr_{0.5}Mo_{9.5} was prepared. The initial alloy melt was solidified at a cooling rate of about 250 K/s into an initial alloy thick strip with a thickness of approximately 3 mm. The solidification structure of the initial alloy thick strip is shown in Figure 8 and includes a dispersed particle phase primarily composed of Fe₇₈Mo₂₀Cr₁La₁ and a La-rich matrix phase, where the matrix phase volume fraction exceeds 70%. The dispersed particle phase is primarily spherical, with a particle size range of 15 nm to 15 µm, and some spherical particles have certain dendritic features.

The La matrix phase in the initial alloy thick strip was removed by reaction with a 0.5 mol/L dilute hydrochloric acid solution. This resulted in a dispersed Fe alloy powder material primarily composed of Fe₇₈Mo₂₀Cr₁La₁, with a shape mainly of spherical particles, and some spherical particles exhibiting certain dendritic features. The particle size range of the spherical particles is 15 nm to 15 µm.

### Example 6

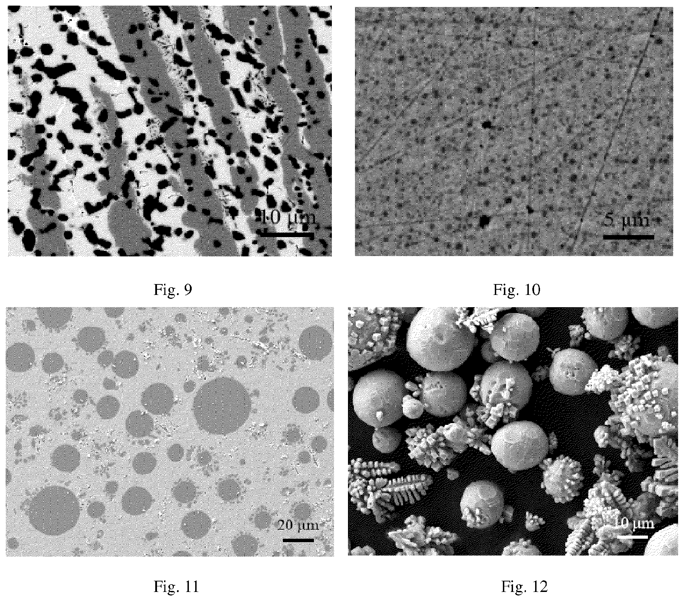

Using commercial La, Fe, Cr, and Si materials, an initial alloy melt with a nominal atomic composition of La₃₄Fe₄₀Cr_{2.5}Si_{23.5} was prepared. The melt was solidified at a cooling rate of about 100 K/s into an initial alloy thick strip with a thickness of approximately 5 mm. The solidification structure of the initial alloy thick strip is shown in Figure 9 and includes a black dispersed particle phase primarily composed of Fe_{85.2}Cr₈Si₆La_{0.8}, a white matrix phase primarily composed of La₆₄Si₃₆, and a gray matrix phase primarily composed of La₃₄Si₃₃Fe₃₃, where the volume fraction of the two matrix phases exceeds 70%. The dispersed particle phase is mainly near-spherical, with a particle size range of 50 nm to 5 µm.

The La₆₄Si₃₆ and La₃₄Si₃₃Fe₃₃ matrix phases in the initial alloy thick strip were removed by reaction with a mixed solution of 0.5 mol/L dilute hydrochloric acid and 1 mol/L hydrofluoric acid. This resulted in a dispersed Fe_{85.2}Cr₈Si₆La_{0.8} alloy powder material with a shape primarily of near-spherical particles, and the particle size range is 50 nm to 5 µm. The prepared powder material can be used in the field of magnetic materials, such as magnetic powder cores.

### Example 7

Using commercial La, Fe, Cr, and Si materials, an initial alloy melt with a nominal atomic composition of La₃₄Fe₄₀Cr_{2.5}Si_{23.5} was prepared. The melt was solidified at a cooling rate of about 10⁵ K/s into an initial alloy strip with a thickness of approximately 100 µm. The solidification structure of the initial alloy strip is shown in Figure 10 and includes a black dispersed particle phase primarily composed of Fe_{82.5}Cr₈Si₈La_{1.5} and a matrix phase with an average composition of La₆₀Si₂₀Fe₂₀, where the matrix phase volume fraction is greater than 70%. The dispersed particle phase is mainly fine spherical particles, with a particle size range of 15 nm to 2 µm.

The matrix phase with an average composition of La₆₀Si₂₀Fe₂₀ in the initial alloy strip was removed by reaction with a mixed solution of 0.5 mol/L dilute hydrochloric acid and 1 mol/L hydrofluoric acid. This resulted in a dispersed Fe_{82.5}Cr₈Si₈La_{1.5}, containing Si alloy powder material with a shape primarily of near-spherical particles, and the particle size range is 15 nm to 2 µm. The prepared powder material can be used in the field of magnetic materials, such as magnetic powder cores.

### Example 8

Using commercial La, Fe, Cr, and Si materials, an initial alloy melt with a nominal atomic composition of La₅₀Fe₄₀Cr₅Si₅ was prepared. The melt was solidified at a cooling rate of about 250 K/s into an initial alloy thick strip with a thickness of approximately 3 mm. The solidification structure of the initial alloy thick strip is shown in Figure 11 and includes a dispersed particle phase primarily composed of Fe₈₆Cr₁₂Si₁La₁ and a matrix phase primarily composed of La₉₂Si₈, where the matrix phase volume fraction exceeds 70%. The dispersed particle phase is mainly spherical, with a small amount of dendritic particles, and some spherical particles have certain dendritic features. The particle size range of the spherical particles is 15 nm to 40 µm.

The LaSi matrix phase in the initial alloy thick strip was removed by reaction with a mixed solution of 0.5 mol/L dilute hydrochloric acid, 0.1 mol/L dilute nitric acid, and 0.5 mol/L hydrofluoric acid (HF can remove Si). This resulted in a dispersed Fe₈₆Cr₁₂Si₁La₁ alloy powder material with a shape primarily of spherical particles and a small amount of dendritic particles, with some spherical particles exhibiting certain dendritic features. The particle size range of the spherical particles is 15 nm to 40 µm, as shown in Figure 12.

### Example 9

Using commercial La, Fe, Cr, and Si materials, an initial alloy melt with a nominal atomic composition of La₅₀Fe₄₁Cr₄Si₅ was prepared. The melt was solidified at a cooling rate of about 1000 K/s into an initial alloy strip with a thickness of approximately 500 µm. The solidification structure of the initial alloy strip includes a dispersed particle phase primarily composed of Fe_{90.5}Cr₈Si_{0.5}La₁ and a matrix phase primarily composed of La₉₄Si₆, where the matrix phase volume fraction exceeds 70%. The dispersed particle phase is mainly spherical, with a small amount of dendritic particles, and some spherical particles exhibit certain dendritic features. The particle size range of the spherical particles is 15 nm to 10 µm.

The LaSi matrix phase in the initial alloy strip was removed by reaction with 0.5 mol/L dilute hydrochloric acid, while retaining most of the Si (Si generally does not react with dilute hydrochloric acid), resulting in a composite powder of Fe_{90.5}Cr₈Si_{0.5}La₁ alloy and nano-porous Si. The nano-porous Si has a fragmented porous structure, and the iron alloy powder is mainly spherical, with a small amount of dendritic particles, and some spherical particles exhibit certain dendritic features. The particle size range of the spherical particles is 15 nm to 10 µm.

The spherical iron alloy powder and nano-porous Si composite powder were pressed and densified, then solid siliconized in a vacuum at 1000°C for 4 hours, followed by powder dispersion. This resulted in a high-silicon content iron-chromium-silicon powder with a composition of approximately Fe₈₂Cr₇Si₁₀La₁.

The high-silicon content iron-chromium-silicon powder, after screening, selects particles with a size range of 3 µm to 10 µm, which can be used in the field of soft magnetic materials, such as magnetic powder cores.

### Example 10

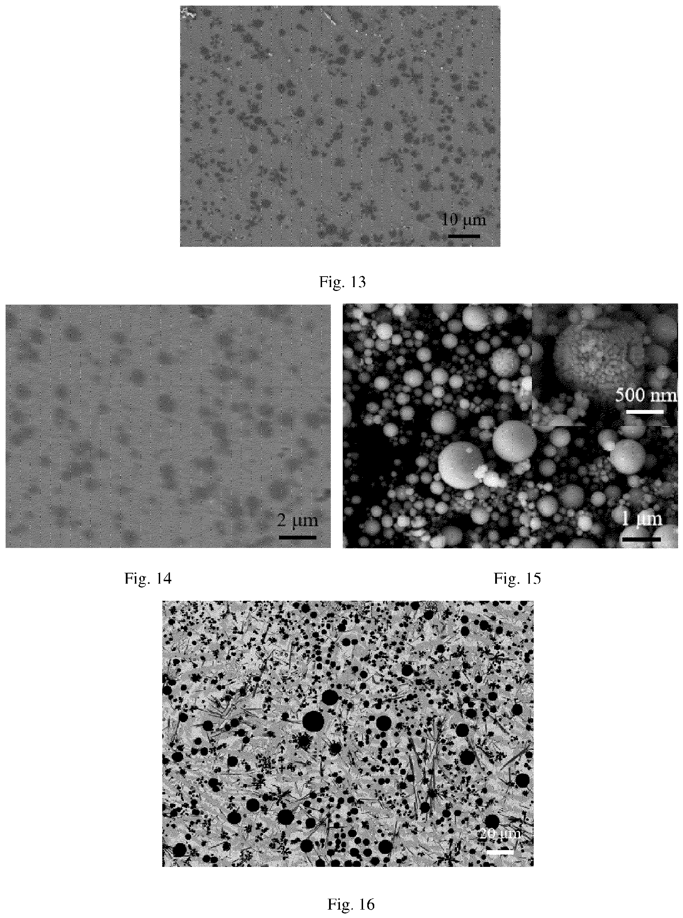

Using commercial La, Fe, Cr, and Al materials, an initial alloy melt with a nominal atomic composition of La₄₅Fe_{27.5}Cr_{7.5}Al₂₀ was prepared. The melt was solidified at a cooling rate of about 250 K/s into an initial alloy thick strip with a thickness of approximately 3 mm. The solidification structure of the initial alloy thick strip is shown in Figure 13 and includes a dispersed particle phase primarily composed of Fe₇₂Cr₂₀Al₇La₁ and a matrix phase primarily composed of La₇₅Al₂₅, where the volume fraction of the matrix phase exceeds 70%. The dispersed particle phase is mainly spherical, with a small amount of dendritic particles, and some spherical particles exhibit certain dendritic features. The particle size range of the spherical particles is 15 nm to 10 µm.

The La₇₅Al₂₅ matrix phase in the initial alloy thick strip was removed by reaction with 0.5 mol/L dilute hydrochloric acid, resulting in a dispersed Fe₇₂Cr₂₀Al₇La₁ alloy powder material. The shape is primarily spherical particles, with a small amount of dendritic particles, and some spherical particles exhibit certain dendritic features. The particle size range is 15 nm to 10 µm. The prepared powder material can be used in fields such as electrical heating alloys, heat-resistant alloys, and heat-resistant coatings.

### Example 11

Using commercial La, Fe, Cr, and Al materials, an initial alloy melt with a nominal atomic composition of La₄₅Fe_{27.5}Cr_{7.5}Al₂₀ was prepared. The melt was solidified at a cooling rate of about 10⁴ K/s into an initial alloy thin strip with a thickness of approximately 150 µm. The solidification structure of the initial alloy thin strip is shown in Figure 14 and includes a dispersed particle phase primarily composed of Fe₇₁Cr₂₁Al₇La₁ and a matrix phase primarily composed of La₇₅Al₂₅, where the volume fraction of the matrix phase exceeds 70%. The dispersed particle phase is almost entirely spherical, with some spherical particles exhibiting certain dendritic features. The particle size range of the spherical particles is 5 nm to 5 µm.

The La₇₅Al₂₅ matrix phase in the initial alloy thin strip was removed by reaction with 0.5 mol/L dilute hydrochloric acid, resulting in a dispersed Fe₇₁Cr₂₁Al₇La₁ alloy powder material. The shape is almost entirely spherical, with some spherical particles exhibiting certain dendritic features, as shown in Figure 15. The particle size range is 5 nm to 5 µm. The prepared powder material can be used in fields such as electrical heating alloys, heat-resistant alloys, and heat-resistant coatings.

### Example 12

Using commercial La, Fe, Cr, Al, and Mo materials, an initial alloy melt with a nominal atomic composition of La₃₈Fe₂₅Cr₁₀Al₂₅Mo₂ was prepared. The melt was solidified at a cooling rate of about 500 K/s into an initial alloy thick strip with a thickness of approximately 1 mm. The solidification structure of the initial alloy thick strip is shown in Figure 16 and includes a dispersed particle phase primarily composed of Fe₆₀Cr₂₅Al₈Mo₆La₁ and matrix phases primarily composed of La₅₀Al₅₀ (gray plate-like and fibrous phases) and La₇₅Al₂₅ (white phase), where the overall volume fraction of the matrix phases exceeds 70%. The dispersed particle phase is mainly spherical, with a small amount of dendritic particles, and some spherical particles exhibit certain dendritic features. The particle size range of the spherical particles is 15 nm to 40 µm.

The La₅₀Al₅₀ and La₇₅Al₂₅ matrix phases in the initial alloy thick strip were removed by reaction with 1 mol/L dilute hydrochloric acid, resulting in a dispersed Fe₆₀Cr₂₅Al₈Mo₆La₁ alloy powder material. The shape is primarily spherical particles, with a small amount of dendritic particles, and some spherical particles exhibit certain dendritic features. The particle size range is 15 nm to 40 µm. The prepared powder material can be used in fields such as electrical heating alloys, heat-resistant alloys, and heat-resistant coatings. Due to the presence of Mo, the powder material has higher temperature resistance and corrosion resistance.

### Example 13

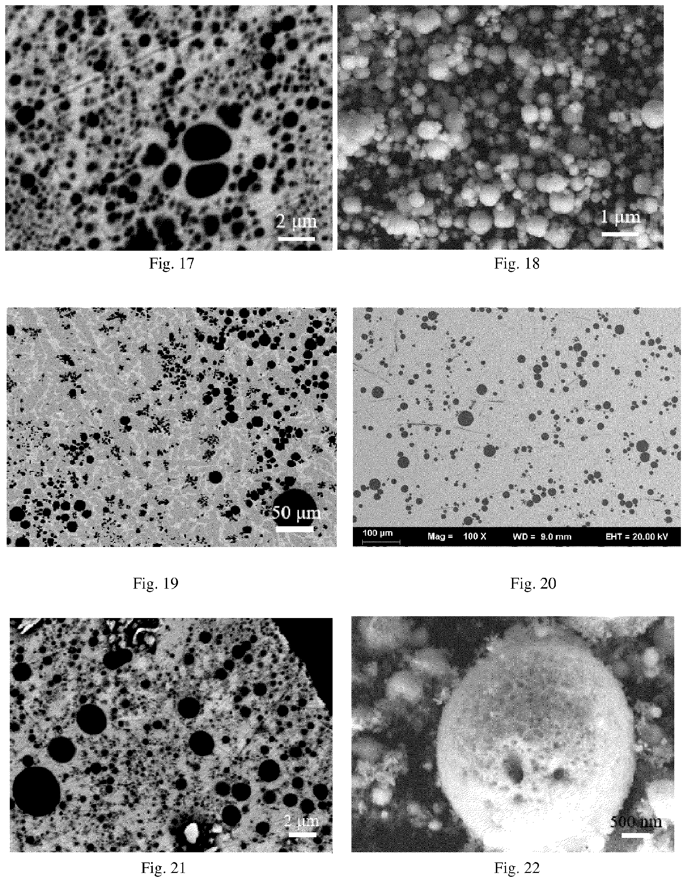

Using commercial La, Fe, Cr, and Co materials, an initial alloy melt with a nominal atomic composition of La_{27.5}Fe_{37.5}Cr₁₀Co₂₅ was prepared. The melt was solidified at a cooling rate of about 250 K/s into an initial alloy thick strip with a thickness of approximately 3 mm. The solidification structure of the initial alloy thick strip is shown in Figure 17 and includes a dispersed particle phase primarily composed of Fe₆₃Cr₁₉Co₁₇La₁ and a matrix phase primarily composed of La₆₀Co₄₀, where the overall volume fraction of the matrix phase exceeds 50%. The dispersed particle phase is almost entirely spherical, with only a small amount of dendritic particles, and some spherical particles exhibit certain dendritic features. The particle size range of the spherical particles is 15 nm to 6 µm.

The La₆₀Co₄₀ matrix phase in the initial alloy thick strip was removed by reaction with 1 mol/L dilute hydrochloric acid, resulting in a dispersed Fe₆₃Cr₁₉Co₁₇La₁ alloy powder material, as shown in Figure 18. The shape is primarily spherical particles, with a small amount of dendritic particles, and some spherical particles exhibit certain dendritic features. The particle size range is 15 nm to 6 µm. The prepared powder material can be used in the field of magnetic materials.

### Example 14

Using commercial La, Fe, Cr, and Ni materials, an initial alloy melt with a nominal atomic composition of La_{27.5}Fe_{37.5}Cr₁₀Ni₂₅ was prepared. The melt was solidified at a cooling rate of about 250 K/s into an initial alloy thick strip with a thickness of approximately 3 mm. The solidification structure of the initial alloy thick strip is shown in Figure 19 and includes a dispersed particle phase primarily composed of Fe₇₀Cr₂₀Ni₉La₁ and matrix phases primarily composed of La₅₀Ni₅₀ and La₇₅Ni₂₅, where the overall volume fraction of the matrix phases exceeds 50%. The dispersed particle phase is mainly spherical, with a small amount of dendritic particles, and some spherical particles exhibit certain dendritic features. The particle size range of the spherical particles is 15 nm to 50 µm.

The La₅₀Ni₅₀ and La₇₅Ni₂₅ matrix phases in the initial alloy thick strip were removed by reaction with 1 mol/L dilute hydrochloric acid, resulting in a dispersed Fe₇₀Cr₂₀Ni₉La₁ alloy powder material. The shape is primarily spherical particles, with a small amount of dendritic particles, and some spherical particles exhibit certain dendritic features. The particle size range is 15 nm to 50 µm.

### Example 15

Using commercial La, Fe, Cr, Ni, Mo, and Ti materials, an initial alloy melt with a nominal atomic composition of La₃₅Fe₃₆Cr₁₀Ni₁₅Mo₁Ti₂ was prepared. The melt was solidified at a cooling rate of about 50 K/s into a button ingot with a thickness of 6 mm and a diameter of 12 mm. The solidification structure of the initial alloy button ingot is shown in Figure 20 and includes a dispersed particle phase primarily composed of Fe₇₀Cr₂₀Ni₃Mo₂Ti₄La₁ and matrix phases primarily composed of La₈₁Ni₁₉ (including La and La₃Ni phases), where the overall volume fraction of the matrix phases exceeds 70%. The dispersed particle phase is almost entirely spherical, with only a small amount of dendritic particles, and some spherical particles exhibit certain dendritic features. The particle size range of the spherical particles is 15 nm to 50 µm.

The La₈₁Ni₁₉ matrix phase in the initial alloy button ingot was removed by reaction with 1 mol/L hydrochloric acid, while retaining the corrosion-resistant dispersed particle phase, resulting in a dispersed Fe₇₀Cr₂₀Ni₃Mo₂Ti₄La₁ spherical iron alloy powder material. The iron alloy powder material is primarily spherical particles, with a small amount of dendritic particles, and some spherical particles exhibit certain dendritic features. The particle size range is 15 nm to 50 µm.

### Example 16

Using commercial La, Fe, Cr, and Ni materials, an initial alloy melt with a nominal atomic composition of La_{27.5}Fe_{37.5}Cr₁₀Ni₂₅ was prepared. The melt was solidified at a cooling rate of about 5000 K/s into an initial alloy strip with a thickness of approximately 200 µm. The solidification structure of the initial alloy strip is shown in Figure 21 and includes a dispersed particle phase primarily composed of Fe₇₀Cr₂₀Ni₉La₁ and a matrix phase primarily composed of La₆₀Ni₄₀, where the overall volume fraction of the matrix phase exceeds 50%. The dispersed particle phase is almost entirely spherical, with only a small amount of dendritic particles, and some spherical particles exhibit certain dendritic features. The particle size range of the spherical particles is 15 nm to 6 µm.

By using 0.2 mol/L dilute hydrochloric acid to remove La from the matrix phase of the initial alloy strip through a de-alloying reaction, while retaining some nanoporous Ni, a composite powder consisting of spherical Fe₇₀Cr₂₀Ni₉La₁ alloy powder and nanoporous Ni is obtained, as shown in Figure 22. The fluffy material on the surface of the spherical particles is nanoporous Ni. The iron alloy powder is primarily spherical particles, with a small amount of dendritic particles, and some spherical particles exhibit certain dendritic features. The particle size range of the spherical particles is 15 nm to 6 µm.

The spherical Fe₇₀Cr₂₀Ni₉La₁ alloy powder and nanoporous Ni composite powder are pressed into billets at 100 MPa, followed by heat treatment at 1300°C for 4 hours in a protective atmosphere, resulting in a high-nickel iron-chromium-nickel high-temperature alloy product with a composition of approximately Fe₅₂Cr₁₅Ni₃₃La₁.

### Example 17

Using commercial La, Fe, and Cr materials, an initial alloy melt with a nominal atomic composition of La₄₅Fe₄₀Cr₁₅ was prepared. The melt was solidified at a cooling rate of about 10⁶ to 10⁷ K/s into an initial alloy strip with a thickness of approximately 20 µm. The solidification structure of the initial alloy strip includes a Fe-rich dispersed nanoparticle phase (too small for direct composition detection) and a matrix phase primarily composed of La, with the matrix phase having a volume percentage content exceeding 60%. The dispersed particle phase is almost entirely nanospherical, with some spherical particles exhibiting dendritic features. The particle size range of the spherical particles is 5 nm to 200 nm.

The La matrix phase in the initial alloy strip was removed by reaction with 0.5 mol/L dilute hydrochloric acid, resulting in a dispersed nano iron alloy powder material with a primary composition of Fe₇₁Cr₂₇La₂ (due to the presence of Cr, making the Fe₇₁Cr₂₇La₂ nanoparticles less susceptible to acid dissolution). The material is almost entirely spherical particles, with some spherical particles exhibiting dendritic features. The particle size range of the nano iron alloy powder is 5 nm to 200 nm.

### Example 18

Using commercial La, Fe, and Cr materials, an initial alloy melt with a nominal atomic composition of La₅₀Fe₄₆Cr₄ was prepared. The melt was solidified at a cooling rate of about 10⁴ K/s into an initial alloy strip with a thickness of approximately 150 µm. The solidification structure of the initial alloy strip includes a dispersed particle phase primarily composed of Fe₉₁Cr₈La₁ and a matrix phase primarily composed of La. Cr and La are solid-solutioned in the Fe-rich dispersed particles. The Fe-rich dispersed particles are mainly spherical, with a small amount of dendritic particles, and some spherical particles exhibit dendritic features. The particle size range of the Fe-rich spherical particles is 15 nm to 10 µm.

The La matrix phase in the initial alloy strip was removed by reaction with 0.5 mol/L dilute hydrochloric acid, resulting in a dispersed iron alloy powder material with a primary composition of Fe₉₁Cr₈La₁. The powder includes spherical and dendritic particles, with a predominance of spherical particles, and some spherical particles exhibit dendritic features. The particle size range of the spherical particles is 15 nm to 10 µm.

The obtained iron alloy powder material was subjected to silicon infiltration treatment in a gas mixture of silicon chloride (SiCl₄, or Si₂Cl₆, or a mixture of SiCl₄ and Si₂Cl₆) and hydrogen, at a treatment temperature of 400°C to 1000°C. This resulted in a high-silicon-content spherical iron alloy powder material with a composition of approximately Fe_{81.5}Cr₇Si_{10.5}La₁. The shape remains largely unchanged from before silicon infiltration, including spherical and dendritic particles, with a predominance of spherical particles and some spherical particles exhibiting dendritic features. The particle size range of the spherical particles is 15 nm to 10 µm.

After screening, Fe_{81.5}Cr₇Si_{10.5}La₁ powders with particle sizes ranging from 1 µm to 10 µm are selected for insulation coating, and then magnetic powder cores are prepared.

### Example 19

Using commercial La, Fe, and Cr materials, an initial alloy melt with a nominal atomic composition of La₃₅Fe₅₀Cr₁₅ was prepared. By using atomization powder technology, the melt was atomized at a cooling rate of approximately 10³ to 10⁶ K/s into initial alloy powders with sizes ranging from 5 µm to 300 µm. The solidification structure of the initial alloy powder includes a dispersed particle phase primarily composed of Fe_{75.5}Cr₂₃La_{1.5} and a matrix phase primarily composed of La, with the matrix phase having a volume percentage content exceeding 50%. The dispersed particle phase is almost entirely spherical, with some spherical particles exhibiting dendritic features. The particle size range of the spherical particles is 5 nm to 10 µm.

The La matrix phase in the initial alloy powder was removed by reaction with 0.5 mol/L dilute hydrochloric acid, resulting in a finer iron alloy powder material with a primary composition of Fe_{75.5}Cr₂₃La_{1.5}. The material is almost entirely spherical particles, with some spherical particles exhibiting dendritic features. The particle size range of the spherical particles is 5 nm to 10 µm. The prepared powder material can be used in conventional powder metallurgy and metal injection molding (MIM) applications.

### Example 20

Using commercial La, Fe, Mo, and Cr materials, an initial alloy melt with a nominal atomic composition of La₅₀Fe₄₉Cr_{0.5}Mo_{0.5} was prepared. The melt was solidified at a cooling rate of about 10⁷ to 10⁸ K/s into an initial alloy strip with a thickness of approximately 15 µm to 20 µm. The solidification structure of the initial alloy strip includes a Fe-rich dispersed nanoparticle phase and a matrix phase primarily composed of La, with the matrix phase having a volume percentage content exceeding 65%. The dispersed particle phase is almost entirely nanospherical, with some spherical particles exhibiting certain dendritic features. The particle size range of the spherical particles is 5 nm to 100 nm.

The La matrix phase in the initial alloy strip was removed by reaction with 0.25 mol/L dilute hydrochloric acid, resulting in a dispersed nano iron alloy powder material with a primary composition of Fe₉₇Cr₁Mo₁La₁ (due to the presence of Cr and Mo, making the Fe₉₇Cr₁Mo₁La₁ nano iron alloy powder particles less susceptible to dissolution by 0.25 mol/L dilute hydrochloric acid). The material is almost entirely spherical particles, with some spherical particles exhibiting dendritic features. The particle size range of the nano Fe₉₇Cr₁Mo₁La₁ iron alloy powder particles is 5 nm to 100 nm.

The obtained nano Fe₉₇Cr₁Mo₁La₁ iron alloy powder particles were used as magnetic solid particles, and a magnetic fluid was prepared using sodium dodecyl sulfate (SDS) and oleic acid as surfactants, with ethanol as the carrier liquid.

### Example 21

Using commercial La, Fe, and Cr materials, an initial alloy melt with a nominal atomic composition of La₅₀Fe₄₇Cr₃ was prepared. The melt was solidified at a cooling rate of about 10⁶ to 10⁸ K/s into an initial alloy strip with a thickness of approximately 15 µm to 20 µm. The solidification structure of the initial alloy strip includes a Fe-rich dispersed nanoparticle phase and a matrix phase primarily composed of La, with the matrix phase having a volume percentage content exceeding 65%. The dispersed particle phase is almost entirely nanospherical, with some spherical particles exhibiting certain dendritic features. The particle size range of the spherical particles is 5 nm to 50 nm.

The La matrix phase in the initial alloy strip was removed by reaction with 0.5 mol/L dilute hydrochloric acid, resulting in a dispersed nano iron alloy powder material with a primary composition of Fe₉₃Cr₆La₁ (due to the presence of Cr, making the Fe₉₃Cr₆La₁ nano iron alloy powder particles less susceptible to dissolution by 0.5 mol/L dilute hydrochloric acid). The material is almost entirely spherical particles, with some spherical particles exhibiting dendritic features. The particle size range of the nano Fe₉₃Cr₆La₁ iron alloy powder particles is 5 nm to 50 nm.

The obtained nano Fe₉₃Cr₆La₁ iron alloy powder particles were used as magnetic solid particles, and a magnetic fluid was prepared using mercury as the carrier liquid.

### Comparative Example 1

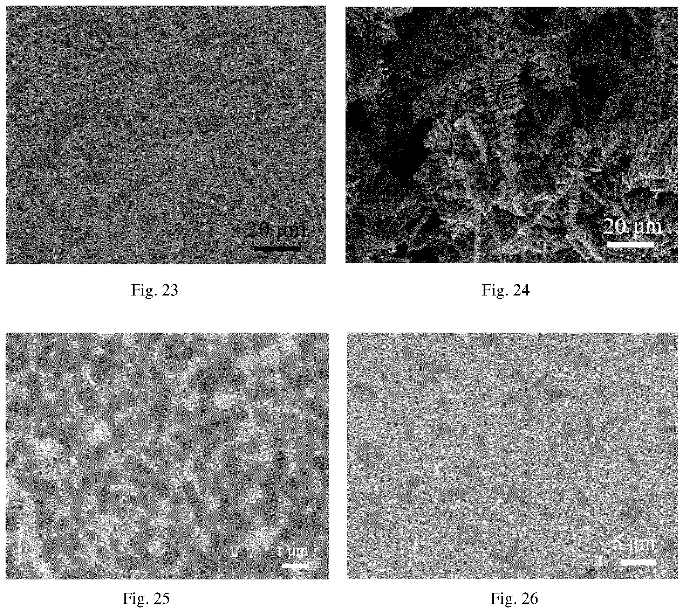

Using commercial La and Fe materials, an initial alloy melt with a nominal atomic composition of La₅₀Fe₅₀ was prepared. The melt was solidified at a cooling rate of about 250 K/s into an initial alloy strip with a thickness of approximately 3 mm. The solidification structure of the initial alloy strip, as shown in Figure 23, includes a dispersed dendritic phase primarily composed of Fe₉₉La₁ and a matrix phase primarily composed of La, with the matrix phase having a volume percentage content exceeding 70%. The dispersed dendritic phase is almost entirely dendritic. The parts that appear to be spherical in Figure 23 are actually cross-sectional views of dendritic branches, with each row of cross-sectional branches belonging to a larger dendrite.

The La matrix phase in the initial alloy strip was removed by reaction with 0.5 mol/L dilute hydrochloric acid, resulting in a dispersed iron alloy dendritic powder material with a primary composition of Fe₉₉La₁. The material is predominantly dendritic, with no spherical particles, as shown in Figure 24. It also clearly shows that a large dendrite will have rows of secondary dendrites, and the cross-sectional view of these secondary dendrites corresponds to the "spheres" shown in Figure 23 (actually rod-shaped cross-sections). Therefore, La₅₀Fe₅₀ alloy can only produce large Fe-rich dendritic particles with very well-developed growth at a slow cooling rate and cannot produce Fe-rich spherical particles.

### Comparative Example 2

Using commercial La and Fe materials, an initial alloy melt with a nominal atomic composition of La₅₀Fe₅₀ was prepared. The melt was solidified at a cooling rate of about 10⁵ K/s into an initial alloy strip with a thickness of approximately 100 µm. The solidification structure of the initial alloy strip, as shown in Figure 25, includes a dispersed dendritic phase primarily composed of Fe₉₉La₁ and a matrix phase primarily composed of La. The dispersed dendritic phase is almost entirely dendritic. The multiple seemingly short rod-shaped Fe-rich black phases in Figure 25 actually belong to one or several dendrites, with these dendrites having sizes of about 1-2 µm. Due to the nanoscale secondary structure of the dendrites and the susceptibility of Fe₉₉La₁ to acid corrosion, when acid corrosion is used, the nanoscale Fe-rich dendrites will also be reacted and corroded, making it difficult to obtain the original Fe-rich particles. Therefore, even with a very high cooling rate, when the initial alloy melt does not contain T or D type elements, it is difficult to obtain spherical Fe-rich particle phases and to improve the corrosion resistance of Fe-rich particles, making them prone to acid reaction separation.

### Comparative Example 3

Using commercial La, Fe, and Hf materials, an initial alloy melt with a nominal atomic composition of La₅₀Fe₄₀Hf₁₀ was prepared. The melt was solidified at a cooling rate of about 500 K/s into an initial alloy strip with a thickness of approximately 1 mm. The solidification structure of the initial alloy strip, as shown in Figure 26, includes a black dispersed dendritic phase with a primary composition of approximately Fe₉₉La₁, a white dispersed dendritic phase with a primary composition of approximately Fe₆₄Hf₃₅La₁, and a matrix phase primarily composed of La. Thus, Hf in the initial alloy melt cannot solidify into the Fe-rich phase during the solidification process and only precipitates as Fe₂Hf intermetallic compounds. The Fe-rich phase is primarily still precipitated as the Fe₉₉La₁ dispersed dendritic phase. Neither dendritic phase results in spherical particle phases. Therefore, adding Hf to La-Fe alloys does not yield spherical Fe-rich particle phases.

### Comparative Example 4

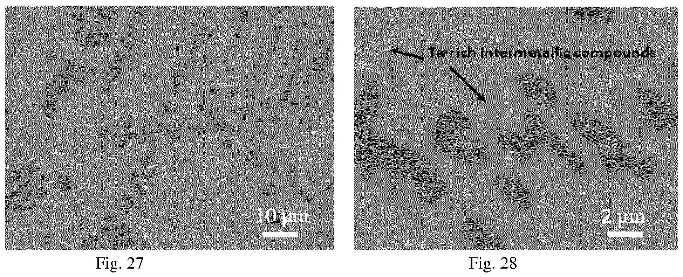

Using commercial La, Fe, and Ta materials, an initial alloy melt with a nominal atomic composition of La₅₀Fe₄₀Ta₁₀ was prepared. The melt was solidified at a cooling rate of about 500 K/s into an initial alloy strip with a thickness of approximately 1 mm. The solidification structure of the initial alloy strip, as shown in Figure 27, includes a black dispersed dendritic phase with a primary composition of approximately Fe₉₉La₁, a white flocculent dendritic phase with a primary composition of approximately Fe₆₉Ta₃₀La₁ (as indicated by the arrow in Figure 28, which is Fe₇Ta₃ intermetallic compound), and a matrix phase primarily composed of La. Thus, Ta in the initial alloy melt cannot solidify into the Fe-rich phase during the solidification process and only precipitates as Fe₇Ta₃ intermetallic compounds. The Fe-rich phase is primarily still precipitated as the Fe₉₉La₁ dispersed dendritic phase. Neither dendritic phase results in spherical particle phases. Therefore, adding Ta to La-Fe alloys does not yield spherical Fe-rich particle phases.

The technical features of the examples described above can be combined in any way. For the sake of simplicity, not all possible combinations of technical features in the above examples have been described, but any combination that does not contradict the technical features should be considered within the scope of this disclosure.

The examples described above are only a few embodiments of the invention. They are described in detail, but this does not imply a limitation on the scope of the invention. It should be noted that those skilled in the art may make various modifications and improvements without departing from the inventive concept, and these are within the scope of the invention. Therefore, the scope of protection of this patent should be determined by the appended claims.

## Claims

1. A method for preparing spherical iron alloy powder material, comprising the following steps:
Step 1: selecting the initial alloy raw materials, melting the initial alloy raw materials according to the initial alloy composition ratio to obtain a uniform initial alloy melt; the main components of the initial alloy melt are LaₓFe_{y}T_{z}MₐD_{b}, wherein T includes at least one of Cr or V, M includes at least one of Al, Ni, Co, or Si, and D includes at least one of Mo, W, or Ti; x, y, z, a, and b represent the atomic percentage content of the corresponding element respectively, and 18% ≤ x ≤ 95.8%, 4% ≤ y ≤ 81.8%, 0.1% ≤ z ≤ 35%, 0 ≤ a≤ 40%, and 0 ≤ b ≤ 15%;
Step 2: solidifying the initial alloy melt into an initial alloy solid using rapid solidification technology; the solidified structure of the initial alloy solid includes a matrix phase and a dispersed particle phase; the melting point of the matrix phase is lower than that of the dispersed particle phase, and the dispersed particle phase is encapsulated within the matrix phase; the volume percentage of the matrix phase in the solidified structure is not less than 40%; the average composition of the matrix phase mainly consists of Laₓ₁Mₐ₁; the composition of the dispersed particle phase mainly consists of Fe_{y2}T_{z2}Mₐ₂D_{b2}Laₓ₂, wherein x1, a1, x2, y2, z2, a2, and b2 represent the atomic percentage content of the corresponding constituent elements respectively, and 45% ≤ x1 ≤ 100%, 0% ≤ a1 ≤ 55%, 50% ≤ y2 ≤ 98%, 0.2% ≤ z2 < 50%, 0% ≤ a2 ≤ 30%, 0% ≤ b2 ≤ 35%, and 0 < x2 ≤ 5%; the dispersed particle phase includes a significant amount of spherical or near-spherical dispersed particle phase, with some spherical or near-spherical dispersed particle phase exhibiting certain dendritic features; the particle size of the dispersed particle phase ranges from 5 nm to 50 µm;
Step 3: removing the matrix phase from the initial alloy solid, retaining mainly the dispersed particle phase to obtain an iron alloy powder material with the main composition of Fe_{y2}T_{z2}Mₐ₂D_{b2}Laₓ₂, wherein 50% ≤ y2 ≤ 98%, 0.2% ≤ z2 < 50%, 0% ≤ a2 ≤ 30%, 0% ≤ b2 ≤ 35%, and 0 < x2 ≤ 5%; the iron alloy powder particles include a significant amount of spherical or near-spherical particles, with some spherical or near-spherical iron alloy powder particles exhibiting certain dendritic features; the particle size of the iron alloy powder particles ranges from 5 nm to 50 µm.

2. The method for preparing a spherical iron alloy powder material according to claim 1, wherein the shape of the dispersed particle phase is mainly spherical or near-spherical.

3. The method for preparing a spherical iron alloy powder material according to claim 1, wherein the composition of the initial alloy melt in step 1 also includes non-metallic impurity elements, which include at least one of O, N, H, P, S, Cl; the atomic percentage content of these non-metallic impurity elements in the initial alloy melt is greater than 0% and less than 10%; during the formation of the Fe-rich dispersed particle phase in step 2, these non-metallic impurity elements are concentrated in the La-rich matrix phase, thereby purifying the Fe-rich dispersed particle phase; that is, the atomic percentage content of non-metallic impurity elements in the Fe-rich dispersed particle phase is lower than in the initial alloy melt; and the atomic percentage content of non-metallic impurity elements in the Fe-rich dispersed particle phase is less than 1.5%; and the content of non-metallic impurity elements in the spherical or near-spherical iron alloy powder particles in step 3 is also lower than the content of non-metallic impurity elements in the initial alloy melt.

4. A spherical iron alloy powder material, wherein the spherical iron alloy powder material is prepared by using the method described in any of claims 1-3; some characteristics of the spherical iron alloy powder material include:
the main component of the spherical iron alloy powder material is Fe_{y2}T_{z2}Mₐ₂D_{b2}Laₓ₂; wherein 50% ≤ y2 ≤ 98%, 0.2% ≤ z2 < 50%, 0% ≤ a2 ≤ 30%, 0% ≤ b2 ≤ 35%, 0 < x2 ≤ 5%; the shape of the iron alloy powder particles is mainly spherical or near-spherical, and some spherical or near-spherical iron alloy powder particles contain certain dendritic features; the particle size of the iron alloy powder particles ranges from 5nm to 50µm; wherein T includes at least one of Cr or V, M includes at least one of Al, Ni, Co, or Si, and D includes at least one of Mo, W, or Ti; x1, a1, x2, y2, z2, a2, and b2 represent the atomic percentage content of the corresponding element respectively.

5. A method for preparing spherical iron-chromium-silicon powder materials with high-silicon-content, wherein the spherical iron alloy powder material prepared in steps 1 to 3 of claim 1, with Fe-Cr or low Si content Fe-Cr-Si as the main components, undergoes silicon infiltration treatment to obtain a high-Si-content spherical powder material with Fe-Cr-Si as the main component.

6. The method for preparing spherical iron-chromium-silicon powder materials with high-silicon-content according to claim 5, wherein the initial alloy solid described in step 2 of claim 1 is prepared according to steps 1 and 2 of claim 1, wherein T includes Cr, M includes Si, and 0 < a ≤ 40%; the average composition of the matrix phase is mainly Laₓ₁Siₐ₁, and the composition of the dispersed particle phase is mainly low-Si-content Fe_{y2}Cr_{z2}Siₐ₂D_{b2}Laₓ₂; in the Laₓ₁Siₐ₁ matrix phase, Si combines with La through intermetallic compounds; 0 < a2 ≤ 8%; the La in the Laₓ₁Siₐ₁ matrix phase of the initial alloy solid is removed through dealloying reaction with a dilute acid solution, while Si in the original Laₓ₁Siₐ₁ matrix phase remains, forming a composite powder of nanoporous Si and the low-Si-content Fe_{y2}Cr_{z2}Siₐ₂D_{b2}Laₓ₂ particles; the nanoporous Si can then serve as a silicon source for the silicon infiltration of the low-Si-content Fe_{y2}Cr_{z2}Siₐ₂D_{b2}Laₓ₂ powder, resulting in a high-Si-content spherical Fe-Cr-Si powder material with the main components of Fe_{y3}Cr_{z3}Siₐ₃D_{b3}Laₓ₃; x3, y3, z3, a3, and b3 represent the atomic percentage content of the corresponding element respectively, and 0<y3<y2, 0<z3<z2, 0<a2<a3, 0≤b≤b2, 0<x3<x2.

7. A high-silicon-content spherical iron-chromium-silicon powder material, wherein the high-silicon-content spherical iron-chromium-silicon powder material is prepared using the method described in claim 5.

8. A composite powder of nanoporous Si and spherical Fe-Cr-Si particles, wherein the composite powder of nanoporous Si and low-Si-content Fe_{y2}Cr_{z2}Siₐ₂D_{b2}Laₓ₂ particles is prepared using the method described in claim 6.

9. A method for preparing a high-nickel-content iron-chromium-nickel powder metallurgy product, comprising the following steps:
Step 1: preparing the initial alloy solid described in step 2 of claim 1 according to steps 1 and 2 of claim 1, wherein T includes Cr, M includes Ni, and 0<a≤40%; the average composition of the matrix phase is mainly Laₓ₁Niₐ₁; and the composition of the dispersed particle phase is mainly low-Ni-content Fe_{y2}Cr_{z2}Niₐ₂D_{b2}Laₓ₂; in the Laₓ₁Niₐ₁ matrix phase, Ni combines with La through intermetallic compounds, and 0<a2≤12%;
Step 2: removing the La from the Laₓ₁Niₐ₁ matrix phase of the initial alloy solid using a dealloying reaction with a dilute acid solution, while ensuring that most of the Ni in the original Laₓ₁Niₐ₁ matrix phase remains, resulting in a composite powder of nanoporous Ni and low-Ni-content Fe_{y2}Cr_{z2}Niₐ₂D_{b2}Laₓ₂ particles;
Step 3: pressing and sintering the composite powder of nanoporous Ni and low-Ni-content Fe_{y2}Cr_{z2}Niₐ₂D_{b2}Laₓ₂ particles to obtain a high-Ni-content iron-chromium-nickel powder metallurgy product with a main component of Fe_{y3}Cr_{z3}Niₐ₃D_{b3}Laₓ₃; x3, y3, z3, a3, b3 represent the atomic percentage content of the corresponding elements respectively, and 0<y3 y2, 0<z3<z2, 0<a2<a3, 0≤ b3≤b2, 0<x3<x2.

10. A high-nickel-content iron-chromium-nickel powder metallurgy product, wherein the high-nickel-content iron-chromium-nickel powder metallurgy product is prepared using the method described in claim 9.

11. A composite powder of nanoporous Ni and low-Ni-content iron-chromium-nickel particles, wherein the composite powder of nanoporous Ni and low-Ni-content iron-chromium-nickel particles is prepared using steps 1 and 2 of the method described in claim 9.

12. The application of the spherical iron alloy powder material described in claim 4 in any of the following fields: general powder metallurgy, metal injection molding (MIM), 3D printing, magnetic materials, heat-resistant materials, high-temperature alloys, coatings, and wave-absorbing materials.

13. The application of the spherical iron alloy powder material described in claim 4 in the field of electric heating materials, wherein the main components of the spherical iron alloy powder material include Fe-Cr-AI.

14. The application of the high-silicon-content spherical iron-chromium-silicon powder material according to claim 7 in magnetic materials.

15. The application of the high-nickel content iron-chromium-nickel powder metallurgy product according to claim 10 in high-temperature alloys.

16. An alloy solid, wherein the alloy solid is prepared through the preparation method of the initial alloy solid described in steps 1 and 2 of claim 1; its specific features include the following preparation steps:
selecting the initial alloy raw materials, melting the initial alloy raw materials according to the initial alloy composition ratio to obtain a uniform initial alloy melt; the main components of the initial alloy melt are LaₓFe_{y}T_{z}MₐD_{b}, wherein T includes at least one of Cr or V, M includes at least one of Al, Ni, Co, or Si, and D includes at least one of Mo, W, or Ti; x, y, z, a, and b represent atomic percentage contents of the corresponding element respectively, and 18% ≤ x ≤ 95.8%, 4% ≤ y ≤ 81.8%, 0.1% ≤ z ≤ 35%, 0 ≤ a ≤ 40%, and 0 ≤ b ≤ 15%;
solidifying the initial alloy melt into an initial alloy solid using rapid solidification technology; the solidified structure of the initial alloy solid includes a matrix phase and a dispersed particle phase; the melting point of the matrix phase is lower than that of the dispersed particle phase, and the dispersed particle phase is encapsulated within the matrix phase; the volume percentage of the matrix phase in the solidified structure is not less than 40%; the average composition of the matrix phase mainly consists of Laₓ₁Mₐ₁; the composition of the dispersed particle phase mainly consists of Fe_{y2}T_{z2}Mₐ₂D_{b2}Laₓ₂, wherein x1, a1, x2, y2, z2, a2, and b2 represent the atomic percentage content of the corresponding constituent elements respectively, and 45%≤x1≤100%, 0%≤a1≤55%, 50%≤y2≤98%, 0.2%≤z2<50%, 0%≤a2≤30%, 0%≤b2≤35%, and 0<x2≤5%; the dispersed particle phase includes a significant amount of spherical or near-spherical dispersed particle phase, with some spherical or near-spherical dispersed particle phase exhibiting certain dendritic features; the particle size of the dispersed particle phase ranges from 5 nm to 50 µm.

17. The application of the spherical iron alloy powder material according to claim 4 in the field of magnetorheological fluids.

18. The application of the spherical iron alloy powder material in the field of magnetorheological fluids according to claim 17, wherein including the following steps:
mixing the spherical iron alloy powder with a carrier fluid and a surfactant evenly to obtain a magnetorheological fluid;
some characteristics of the spherical iron alloy powder material include:
the main component of the spherical iron alloy powder material is Fe_{y2}T_{z2}Mₐ₂D_{b2}Laₓ₂; wherein 50%≤y2≤98%, 0.2%≤z2<50%, 0%≤a2≤30%, 0%≤b2≤35%, 0<x2≤5%; 1%≤z2+b2<50%; the shape of the iron alloy powder particles is mainly spherical or near-spherical, with some spherical or near-spherical iron alloy powder particles exhibiting certain dendritic characteristics; the particle size of the iron alloy powder particles ranges from 5 nm to 100 nm; T includes at least one of Cr, V; M includes at least one of Al, Ni, Co, Si; D includes at least one of Mo, W, Ti; x1, a1, x2, y2, z2, a2, b2 represent the atomic percentage content of the corresponding constituent elements respectively.

19. A coronavirus-shaped spherical iron alloy powder particle, wherein the coronavirus-shaped spherical iron alloy powder particle includes the following features:
the main component of the coronavirus-shaped spherical iron alloy powder particle is Fe_{y2}T_{z2}Mₐ₂D_{b2}Laₓ₂, wherein 50%≤y2≤98%, 0.2%≤z2<50%, 0%≤a2≤30%, 0%≤b2≤35%, 0<x2≤5%; T includes at least one of Cr, V; M includes at least one of Al, Ni, Co, Si; D includes at least one of Mo, W, Ti; La is rare earth element La, and the coronavirus-like spherical iron alloy particle with the main component of Fe_{y2}T_{z2}Mₐ₂D_{b2}Laₓ₂ contains La in a solid solution; x1, a1, x2, y2, z2, a2, b2 represent the atomic percentage content of the corresponding constituent elements respectively;
the coronavirus-like spherical iron alloy powder particle include a main body part and a protruding part; the main body part is a spherical or nearly spherical sphere, and the protruding part consists of multiple protrusions grown in situ on the surface of the main body sphere; the spherical iron alloy powder particle has a coronavirus-like shape, wherein the multiple protrusions of the protruding part correspond to the multiple corona-like protrusions of a coronavirus; the diameter of the main body sphere of the coronavirus-like spherical iron alloy powder particle is 20 nm to 50 µm, and the height of the protrusions on the protruding part is less than 0.3 times the diameter of the main body sphere.
